(19) Europäisches Patentamt
European Patent Office
Office européen des brevets

(11) **EP 3 222 594 B1**

(12) **EUROPÄISCHE PATENTSCHRIFT**

(45) Veröffentlichungstag und Bekanntmachung des Hinweises auf die Patenterteilung:
**29.04.2020 Patentblatt 2020/18**

(51) Int Cl.:
*C03C 17/00* (2006.01)  *C03C 17/30* (2006.01)
*F24C 15/10* (2006.01)

(21) Anmeldenummer: **17161998.4**

(22) Anmeldetag: **21.03.2017**

(54) **GLAS- ODER GLASKERAMIKARTIKEL, INSBESONDERE MIT VERBESSERTER SICHTBARKEIT FÜR ELEKTROOPTISCHE ANZEIGEELEMENTE, UND VERFAHREN ZU DESSEN HERSTELLUNG**

GLASS OR GLASS-CERAMIC ARTICLE, IN PARTICULAR WITH IMPROVED VISIBILITY FOR ELECTRO-OPTIC DISPLAY ELEMENTS, AND METHOD FOR PRODUCING THE SAME

ARTICLE EN VITROCÉRAMIQUE OU EN VERRE, EN PARTICULIER AYANT UNE TRANSPARENCE AMÉLIORÉE POUR DES ÉLÉMENTS D'AFFICHAGE ÉLECTRO-OPTIQUES ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2016 DE 102016105290**

(43) Veröffentlichungstag der Anmeldung:
**27.09.2017 Patentblatt 2017/39**

(73) Patentinhaber: **SCHOTT AG**
**55122 Mainz (DE)**

(72) Erfinder:
• **MANGOLD, Stephanie**
**55270 Klein-Winternheim (DE)**
• **WEBER, Urban**
**55413 Weiler bei Bingen (DE)**
• **Ohl, Gerold**
**55286 Sulzheim (DE)**

(74) Vertreter: **Blumbach · Zinngrebe Patentanwälte PartG mbB**
**Alexandrastraße 5**
**65187 Wiesbaden (DE)**

(56) Entgegenhaltungen:
EP-A1- 2 484 732        WO-A1-2012/172257
DE-A1-102008 012 891    DE-A1-102011 003 677

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gebiet der Erfindung

Die Erfindung betrifft Glas- oder Glaskeramikartikel, für die Anwendung als Kochfläche, welche eine verbesserte Sichtbarkeit für unterhalb davon angeordnete elektrooptische Anzeigeelemente aufweisen, sowie weiterhin ein Verfahren zu deren Herstellung.

Hintergrund der Erfindung

Glas- oder Glaskeramikelemente werden bereits seit vielen Jahren als Kochfelder oder Bedienblenden für Haushaltswaren eingesetzt. Dabei gewinnt die Integration von Anzeigeelementen ("Displays") in solche Kochflächen oder Bedienblenden aufgrund der weiter fortschreitenden Digitalisierung, aber auch aus ästhetischen Gründen, immer höhere Bedeutung. Eine Schwierigkeit bei der Integration solcher Anzeigen ist es allerdings, dass deren Sichtbarkeit durch ein Glas- oder Glaskeramikelement, welches sowohl gefärbt als auch ungefärbt ausgebildet sein kann, hindurch oft erschwert ist. So sind bei streifender Betrachtung, also beispielsweise bei einem Betrachtungswinkel von 80° zur Flächennormalen des Glas- oder Glaskeramikelements, Anzeigen nicht oder nur sehr schlecht sichtbar. Zudem kommt es durch die Verschiebung des Betrachtungswinkels zum Phänomen der "optischen Wanderung", d.h. bei streifender Betrachtung kommt es zu einer scheinbaren Veränderung des Ortes der Lichtquelle bedingt durch die Projektion der Lichtquelle auf das abdeckende Glas- oder Glaskeramikelement. Ebenfalls störend ist es, dass bei der Verwendung mehrerer, insbesondere punktförmiger, Lichtquellen diese oft als getrennt wahrgenommen werden. Vielmehr ist oft eine wesentlich homogenere Lichtverteilung erwünscht, beispielsweise um eine Fläche gleichmäßig auszuleuchten bzw. zu hinterleuchten.
Zusätzlich ergibt sich oft, gerade bei Glaskeramikelementen, welche häufig zum verbesserten Handling eine genoppte Unterseite aufweisen, die Schwierigkeit, dass keine hohe Konturenschärfe möglich ist, da die durch die genoppte Unterseite dem Glaskeramikelement inhärenten Strukturen aufgrund der Lichtbrechung zu einer Verzerrung der Anzeige führen.
Aus dem Stand der Technik sind zur Integration von elektrooptischen Anzeigeelementen in Bedienblenden und/oder Kochflächen aus Glas oder Glaskeramik dabei unterschiedliche Lösungen bekannt.
Beispielsweise beschreibt das deutsche Schutzrecht DE 102 59 297 B4, dass über streuende Elemente Licht aus einem Lichtleiter ausgekoppelt wird. Dieser Lichtleiter besitzt einen gewissen Abstand zur Kochfläche. Zwar kann auf diese Weise eine relativ homogene Lichtverteilung erzielt werden, allerdings resultiert aus dem Abstand des Lichtleiters zum hinterleuchteten Glaselement eine starke Blickwinkelabhängigkeit in der Art, dass bei streifender Betrachtung das Licht nicht bzw. nur sehr schlecht wahrgenommen werden kann und die bezeichnete Position scheinbar "wandert".
Weiterhin beschreibt die US-amerikanische Schutzrechtsanmeldung US 2012/118870 A eine Beleuchtungseinheit, welche unterhalb einer Glaskeramik positioniert ist. Durch den Abstand zur Glaskeramik entsteht auch hierbei eine starke Blickwinkelabhängigkeit und kommt es weiterhin ebenfalls zur vorstehend beschriebenen "optischen Wanderung".
In der US-amerikanischen Schutzrechtsanmeldung US 2013/286630 A werden lichtleitende Elemente offenbart. Gemäß einer speziellen Ausführungsform können diese lichtleitenden Elemente in Kombination mit einer Streuschicht sowie verschiedenen Maskierungselementen eingesetzt werden. Die Streuschicht dient dabei einer homogeneren Ausleuchtung des zu hinterleuchtenden Bereichs. Allerdings sind keine genauen Angaben über den Aufbau dieser Streuschicht gegeben. Weiterhin werden auch hier keine Aussagen über die Blickwinkelabhängigkeit der somit realisierten Beleuchtung getroffen. Die lichtleitenden Elemente, die Streuschichten beinhalten, sind in einem gewissen Abstand zur Unterseite der Glaskeramik angebracht, sodass auch hier Anzeigenelemente durch die Verschiebung des Blickwinkels "wandern".
Es besteht somit ein Bedarf an Glas- oder Glaskeramikelementen, bei welchen insbesondere zumindest in einem Bereich eine verbesserte Sichtbarkeit für elektrooptische Anzeigeelemente in der Art realisiert ist, dass eine homogene Ausleuchtung eines zu hinterleuchtenden Bereichs bei gleichzeitig weitgehender Blickwinkelunabhängigkeit der Beleuchtung vorliegt. Weitere Glas- oder Glaskeramikartikel für die Anwendung als Kochfläche sind in der Patentanmeldung DE102008012891-A1 und in der Patentanmeldung WO2012172257-A1 beschrieben.

Aufgabe der Erfindung

Die Erfindung hat zur Aufgabe, ein Glas- oder Glaskeramikelement zur Verwendung als Kochfläche mit zumindest in einem Teilbereich verbesserter Sichtbarkeit für elektrooptische Anzeigeelemente bereitzustellen. Ein weiterer Aspekt der Erfindung betrifft ein Verfahren zur Herstellung eines solchen Glas- oder Glaskeramikelements.

Zusammenfassung der Erfindung

Die Erfindung wird auf überraschend einfache Weise gelöst durch den Gegenstand der unabhängigen Ansprüche. Bevorzugte Ausführungsformen finden sich in den abhängigen Ansprüchen.

Das erfindungsgemäße Glas- oder Glaskeramikelement, mit verbesserter Sichtbarkeit für elektrooptische Anzeigeelemente in mindestens einem Bereich, weist eine Oberseite sowie eine Unterseite auf. Als Oberseite wird dabei die Seite des Glas- oder Glaskeramikelements bezeichnet, welche in dessen Gebrauch dem Benutzer zugewandt ist. Als Unterseite wird entsprechend diejenige Seite des Glas- oder Glaskeramikelements bezeichnet, welche im Gebrauch dem Benutzer abgewandt ist. Auf der Unterseite ist zumindest in einem Bereich des Glas- oder Glaskeramikelements, in einem Bereich mit verbesserter Sichtbarkeit für elektrooptische Anzeigeelemente, eine Schicht angeordnet, welche einen Gehalt von Streupartikeln zwischen 0,1 Gew.-% und 25 Gew.-% aufweist sowie ein polyestermodifiziertes, kondensationsvernetzendes Silikonharz. Die Transmission $T_b$ für elektromagnetische Strahlung im Wellenlängenbereich von 380 nm bis 780 nm beträgt in dem Bereich mit verbesserter Sichtbarkeit für elektrooptische Anzeigeelemente, für elektromagnetische Strahlung im Wellenlängenbereich von 380 nm bis 780 nm, zwischen 15 % und 30% der Transmission eines unbeschichteten Bereichs des Glas- oder Glaskeramikelements. Die Streupartikel weisen eine mittlere Primärkorngröße zwischen 200 nm und 800 nm auf.

Die Streupartikel umfassende Schicht wird im Rahmen der vorliegenden Erfindung auch als Streuschicht bezeichnet. Ebenfalls synonym werden die Begriffe der Beschichtung und der Schicht verwendet.

Die verbesserte Sichtbarkeit des elektrooptischen Anzeigeelements äußert sich bei den Glas- oder Glaskeramikelementen der vorliegenden Erfindung darin, dass

a. sowohl die Blickwinkelabhängigkeit der Wahrnehmung der Beleuchtung durch das Glas- oder Glaskeramikelement (1) hindurch verringert ist, sodass auch bei streifender Betrachtung die Beleuchtung wahrnehmbar ist, als auch

b. die Intensitätsverteilung der Beleuchtung bei Betrachtung unter einem Winkel in einem Bereich von +/- 5° zur Normale auf die Oberseite des Glas- oder Glaskeramikelements homogener ist, und/oder

c. auf der dem Betrachter abgewandten Seite vorhandene Anzeigeelemente sich hinsichtlich ihres Anzeigeortes bei streifender Betrachtung, d.h. mit dem Winkel $\alpha$ zur Flächennormalen, im Vergleich zum Anzeigeort bei senkrechter Betrachtung lediglich um eine Abweichung $W_\alpha$, welche sich aus der folgenden Gleichung

$$w_\alpha = D \frac{\sin\alpha}{\sqrt{n^2 - \sin^2\alpha}}$$

ergibt, im Vergleich zum Anzeigeort bei senkrechter Betrachtung verschiebt. Hierbei bezeichnet $\alpha$ den Winkel, welcher zwischen der Betrachtungsrichtung und der Flächennormalen gebildet ist, und D die Dicke des Glas- oder Glaskeramikelements.

Beispielhaft kann das Glas- oder Glaskeramikelement aus einer handelsüblichen Glaskeramik ausgebildet sein, beispielsweise als Glaskeramik, welche unter dem Namen CERAN HIGHTRANS® oder unter dem Namen CERAN CLEARTRANS® oder unter dem Namen ROBAX® bekannt ist. Erstere ist dabei im sichtbaren Wellenlängenbereich eingefärbt, die beiden letzteren sind im sichtbaren Wellenlängenbereich nur mit einer sehr geringen Eigenfarbe ausgestaltet und können beispielsweise auch als Kaminsichtscheibe verwendet werden.

Von besonderer Bedeutung ist für das Glas- oder Glaskeramikelement, mit verbesserter Sichtbarkeit für elektrooptische Anzeigeelemente in mindestens einem Bereich, ist die Festigkeit, insbesondere die Stoßfestigkeit. Hierbei ist die Stoßfestigkeit definiert als die Festigkeit des Glas- oder Glaskeramikelements, welche sich bei einer Stoßbelastung von oben, also vorliegend auf die Oberseite eines erfindungsgemäßen Glas- oder Glaskeramikelements, ergibt. Zur Bestimmung der Stoßfestigkeit wird ein sogenannter Kugelfalltest durchgeführt. Dafür werden mindestens 5 Proben, welche laterale Abmessungen von 10*10 cm² sowie eine Dicke von etwa 4 mm aufweisen, mit einer Beschichtung versehen, welche einen Gehalt von Streupartikeln zwischen 0,1 und 25 Gew.-% aufweist sowie ein polyestermodifiziertes, kondensationsvernetzendes Silikonharz. Die Proben werden dann auf einen gummibelegten Auflagerahmen aufgelegt, wobei sichergestellt ist, dass die Gummiauflage frei von Glassplittern oder ähnlichen potentiell das Glas bzw. die Glaskeramik schädigenden Partikeln ist sowie weiterhin die Probe nicht am Rahmen eingeklemmt, sondern in diesen eingelegt vorliegt. Dann wird in einem Fallgestell eine Stahlkugel mit einem Durchmesser von 36 mm sowie einer Masse von 200 g beginnend mit einer Fallhöhe von 5 cm im freien Fall auf die Oberfläche fallen gelassen. Die Fallhöhe ist dabei am Fallgestell ablesbar und wird gemessen zwischen der Unterseite der Stahlkugel und der Oberseite der Probe. Die Fallhöhe wird sodann um jeweils 5 cm erhöht, bis es zum Bruch der Probe kommt. Notiert wird jeweils die letzte bestandene Fallhöhe. Die Festigkeit gilt als ausreichend, wenn der Mittelwert der letzten bestandenen Fallhöhe mehr als 65 cm beträgt.

Die Stoßfestigkeit bei der Belastung eines Glas- oder Glaskeramikelements, welches auf der Unterseite mit einer Beschichtung versehen ist, ist besonders kritisch zu sehen. Beispielsweise ist es bekannt, dass es im Grenzflächenbereich von Beschichtung und Substrat, hier also der Streupartikel umfassenden Schicht und dem Glas- oder Glaskeramikelement zum Auftreten von Rissen kommen kann. Beispielsweise kann dies an unterschiedlichen thermischen Ausdehnungskoeffizienten von Beschichtung und Substrat liegen oder an der Ausbildung einer Anschmelz-Reaktionszone, welche die Oberfläche des Substrats, hier also des Glas- oder Glaskeramikelements, schwächt, beispielsweise durch die Ausbildung von Mikrorissen. Bei einer Belastung eines an der Unterseite beschichteten Substrats von oben, wie im Falle der Stoßfestigkeit, kommt es dann an den geschwächten Bereichen der Unterseite zum Auftreten von Zugspannungen, sodass es zu einem Versagen des Substrats durch Bruch kommt. Durch eine solche "Unterseitenbeschichtung" wird also in der Regel die Stoßfestigkeit eines Substrats herabgesetzt. Dies ist besonders für Glas- oder Glaskeramikelemente kritisch, da diese aufgrund ihrer sehr niedrigen thermischen Dehnung besonders zum Ausbilden thermomechanischer Spannungen und aufgrund dessen zur Bildung von Rissen und/oder Ausmuschelungen neigen. Der Grund hierfür wird in den stark unterschiedlichen Ausdehnungskoeffizienten zwischen dem Substratmaterial und der Beschichtung vermutet. Darüber hinaus hat sich gezeigt, dass Schichten, welche eine besonders gute Haftung aufweisen, die Stoßfestigkeit besonders stark herabsetzen. Dies betrifft insbesondere solche Schichten, welche eine besonders gute Bindung zum Substratmaterial eingehen oder die einen hohen Gehalt an Bindemittel aufweisen. Schwierigkeiten ergeben sich darüber hinaus, wenn die Beschichtung nicht nur ausreichend am Substratmaterial haften soll, sondern auch eine gewisse Temperaturbeständigkeit notwendig ist, da elastische Beschichtungsmaterialien, beispielsweise organische Lacke, in der Regel weniger stark auf die Unterseite einwirken.

Als ausreichend wird die Haftung einer Schicht an einem Substrat im Rahmen der vorliegenden Erfindung insbesondere dann verstanden, wenn die Beschichtung keine Delamination bei a) Erhitzung des Schichtverbundes auf 200°C und/oder unter einer Krafteinwirkung von 5 N, bevorzugt 10 N, zeigt.

Überraschenderweise hat sich gezeigt, dass gemäß einer Ausführungsform der Erfindung bei einer Ausgestaltung des Glas- oder Glaskeramikelements, mit verbesserter Sichtbarkeit für elektrooptische Anzeigeelemente in mindestens einem Bereich, mit einer Schicht, welche Streupartikel mit einem Gehalt zwischen 0,1 Gew.-%und 25 Gew.-% umfasst, trotz des relativ hohen Gehalts an Bindemittel dennoch eine ausreichende Stoßfestigkeit erhalten wird, also eine Stoßfestigkeit von mehr als 65 cm im Mittelwert, vorzugsweise bestimmt an mindestens 5 Proben, welche laterale Abmessungen von 10*10 cm$^2$ sowie eine Dicke von etwa 4 mm aufweisen, durch eine Stahlkugel mit einem Durchmesse von 36 mm sowie einer Masse von 200 g.

Bevorzugt ist gemäß einer Ausführungsform der Erfindung das Glas- oder Glaskeramikelement so ausgestaltet, dass sich bestimmte Eigenschaften der Beschichtung bei thermischer Belastung nicht ändern, wobei als thermische Belastung insbesondere eine Dauerbelastung von mindestens 75 h bei einer Temperatur von mindestens 200°C, bevorzugt mindestens 250°C und besonders bevorzugt 270°C oder mehr bezeichnet wird. Insbesondere bevorzugt wird auch nach einer solchen thermischen Belastung oder Temperaturbelastung weiterhin eine ausreichende Stoßfestigkeit von mindestens 65 cm im Mittelwert erzielt, insbesondere bevorzugt ist weiterhin eine ausreichende Haftfestigkeit der Beschichtung auf dem Substrat gegeben und insbesondere bevorzugt kommt es zu keiner Veränderung der optischen Eigenschaften.

Als Streupartikel werden hierbei Partikel bezeichnet, welche sichtbares Licht auch streuen. Die Streupartikel können im Rahmen der vorliegenden Erfindung Partikelgrößen bis zu 10 μm aufweisen, wobei als Partikelgröße hier die maximale laterale Ausdehnung des in Rede stehenden Partikels in einer Raumrichtung gemeint ist. Insbesondere kann ein Streupartikel im Sinne der vorliegenden Erfindung auch als plättchenförmiger Partikel vorliegen. In diesem Fall bezieht sich die Angabe der Partikelgröße auf die größte laterale Abmessung, sodass beispielsweise die Plättchendicke, welche meine Größenordnung geringer sein kann als die größte laterale Abmessung des Partikels, nicht in die Betrachtung der Partikelgröße einfließt.

Als Streupartikel werden im Sinne der vorliegenden Erfindung insbesondere Partikel von Materialien bezeichnet, welche keine Färbung aufweisen, also im Wesentlichen über den Wellenlängenbereich von 380 bis 780 nm einen gleichbleibenden Absorptionskoeffizienten für elektromagnetische Strahlung aufweisen, sowie bevorzugt einen Brechwert von größer als 1,6 bei 560 nm Wellenlänge. Weiterhin ist es auch möglich, Mischungen unterschiedlicher als Streupartikel wirkender Partikel zu verwenden.

Als Streupartikel werden im Sinne der vorliegenden Erfindung aber nicht nur Partikel bezeichnet, welche Licht streuen, beispielsweise durch Mie-Streuung, sondern allgemein Partikel, welche in eine Schicht bzw. in ein schichtbildendes Material (auch Schichtmatrix) integriert Streulicht erzeugen. Beispielsweise kann dies der Fall sein bei Partikeln, welche selbst eine raue Oberfläche aufweisen und somit durch regellose Reflexion an ihrer Oberfläche Licht in verschiedene Raumrichtungen reflektieren, sodass keine einheitliche Reflexion, sondern vielmehr regellose Reflexion resultiert und somit das Licht streut. Auch sind vom Begriff der Streupartikel solche Partikel umfasst, welche beispielsweise zu einer rauen, beispielsweise einer mikrorauen Oberfläche der Schicht führen, sodass in diesem Fall die regellose Reflexion nicht auf der Ebene der Partikel, sondern vielmehr auf Schichtebene resultiert. So hat sich überraschend gezeigt, dass auch Partikel, welche eine deutliche von "klassischen" Streupartikeln mit Partikelgrößen, welche in etwa der Wellenlänge des zu streuenden sichtbaren Lichts liegen, also zwischen 200 nm und 800 nm liegen, abweichende Partikelgröße aufweisen, dennoch als Streupartikel im Sinne der vorliegenden Erfindung wirken können.

Optional ist gemäß einer Ausführungsform der Erfindung darüber hinaus die Darstellung feiner Strukturen auf der dem Betrachter abgewandten Seite der Glaskeramik verbessert, insbesondere so, dass eine Auflösung des Anzeigeelements von 120 dpi oder mehr realisierbar ist.

Gemäß einer weiteren Ausführungsform der Erfindung beträgt der Haze-Wert in dem Bereich des Glas- oder Glaskeramikelements mit verbesserter Sichtbarkeit für elektrooptische Anzeigeelemente mehr als 95 %. Der Haze-Wert stellt dabei ein Maß für die Lichtstreuung dar und wird vorzugsweise bestimmt durch Messung mit einem Messgerät Haze Guard Dual, welches das gestreute Licht (Haze) aus der Gesamttransmission der Proben berechnet.

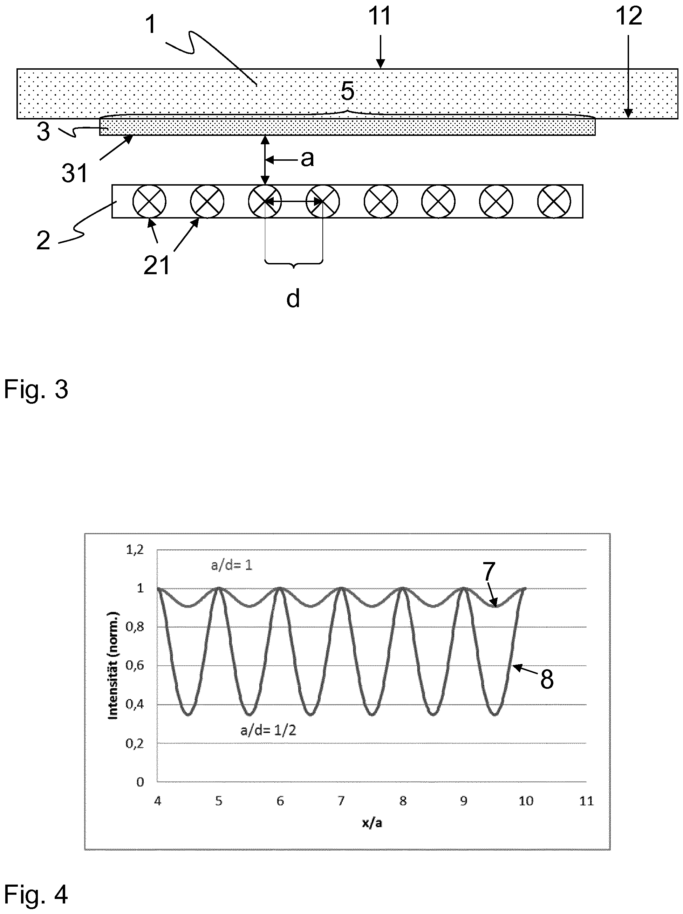

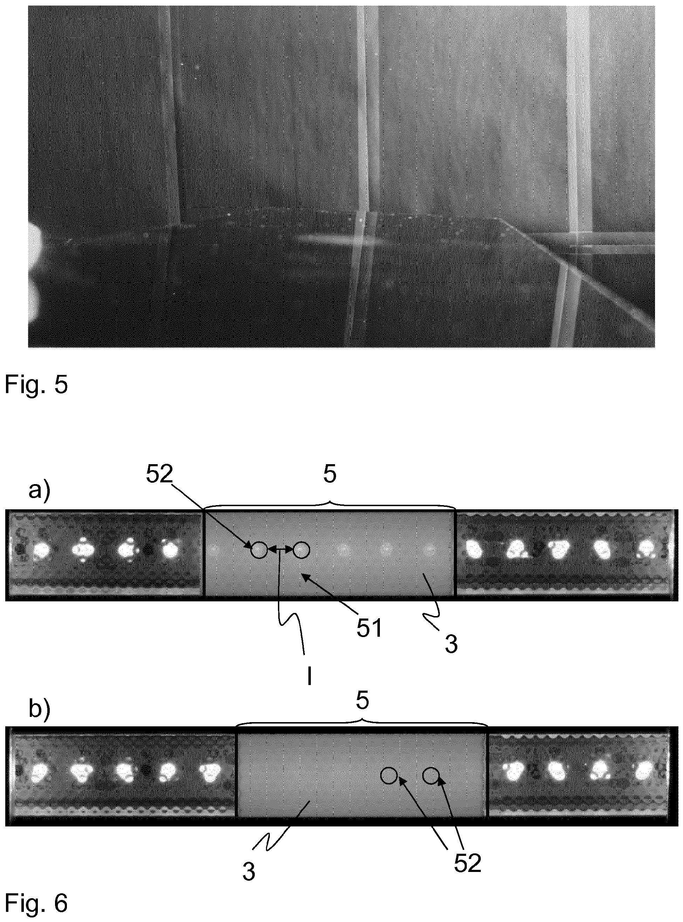

Um die Lichtpunktauflösung zu bewerten, können die Helligkeitswerte aus den fotographischen Aufnahmen der Lichtleisten (eine beispielhafte Aufnahme findet sich in Fig. 6) ausgewertet werden, wobei die fotographischen Aufnahmen bevorzugt mit einer Graustufenkamera erfolgen, sodass also vorzugsweise die für das menschliche Auge relevante Helligkeit ermittelt wird, vorzugsweise auch unabhängig von der Farbe. Bei der fotographischen Aufnahme ist die Geometriebedingung zu beachten, dass der Abstand der LED untereinander gleich dem Abstand der LED von dem Glas- oder Glaskeramikelement ist, d.h. d = a in Fig. 3. Die LED-Leiste liegt dabei auf einem metallischen Untergrund, welche beispielsweise aus gebürstetem Aluminium ausgebildet sein kann. die Leiste umfasst mindestens 8 LED mit einem spezifizierten Abstrahlwinkel von 120°. Eine geeignete Kenngröße ist das Verhältnis von maximaler Intensität zu minimaler Intensität entlang der Verbindungslinie der LED zwischen den beiden äußeren LED ($I_{min}$/ $I_{max}$). Die Linie, entlang derer die Intensitäten ermittelt werden, wird definiert durch die Intensitätsmaxima der Beleuchtung, die durch die beiden äußeren LED erzeugt werden (= Anfangs- und Endpunkt der geraden Linien). Die fotographischen Grauwertaufnahmen sollen so durchgeführt werden, dass der maximale Grauwert der beleuchteten Fläche nach Mittelung über eine Fläche von 5*5 Pixeln ca. 80% des maximal darstellbaren Grauwerts beträgt. Die Intensitäten werden entlang der Linie ermittelt, indem über ein Rechteckt von mindestens 5*5 Pixeln gemittelt wird. Dabei soll die Länge des Rechtsecks in Richtung der Verbindungslinie der beiden äußeren LED a/20 betragen und senkrecht hierzu a/2. Die Positionen der LED sollen aus der gleichen fotographischen Aufnahme ermittelt werden. Die Bestimmung des Minimums der Intensität wird so durchgeführt, dass mindestens 4 LED rechts und vier LED links von der Position liegen, an der das Minimum bestimmt wird. Die zu verwendende Kamera ist ausgebildet als eine acA1920 - 40 $\mu$m / Graustufenkamera der Basler AG und das Objektiv ist ausgebildet als LM35HC Megapixel der Kowa GmbH, alternativ sind Kamera und Objektiv mit vergleichbaren optischen und messtechnischen Eigenschaften zu verwenden. Bei der verwendeten Grauwertmesseinrichtung wird das Graustufenbild beispielsweise mit Hilfe der Bildauswertungssoftware Halcon SDK Industry 12 der MVTec Software GmbH ausgewertet. Es hat sich gezeigt, dass die Messung unabhängig von den Belichtungsbedingungen und der Helligkeit der Beleuchtung ist, vorausgesetzt das Bild ist nicht unter- oder überbelichtet. Falls durch eine besonders homogenisierende Variante der Streupartikel umfassenden Schicht die Intensitätsmaxima in der fotographischen Aufnahme nicht mehr erkennbar sind, kann ersatzweise zur Bestimmung des Anfangs- und Endpunkts der geraden Linie bzw. der Abstände der LED voneinander eine in gleicher Geometrie gewonnen fotographischen Aufnahme hinzugezogen werden, welche eine gleiche Platte, allerdings ohne Streupartikel umfassende Schicht, zeigt. Aus Vergleich mit einer subjektiven Bewertung ergibt sich, dass für Verhältnisse $I_{min}$/ $I_{max}$ von größer als 0,35 , bevorzugt von größer als 0,7, besonders bevorzugt von größer als 0,95 die LED nicht mehr als "auffällig" eingeschätzt werden. Bei den genannten Geometrieanforderungen an die Beleuchtungseinheit ergibt sich für die erfindungsgemäßen Lösungen $I_{min}$/ $I_{max}$ > 0,35, bevorzugt > 0,7, besonders bevorzugt > 0,95.

Gemäß einer bevorzugten Ausführungsform der Erfindung ist daher das Glas- oder Glaskeramikelement so ausgestaltet, dass das Verhältnis von maximaler Intensität zu minimaler Intensität entlang der Verbindungslinie der LED zwischen den beiden äußeren LED, $I_{min}/I_{max}$, wobei die Intensität jeweils bestimmt ist als Helligkeit mittels einer Graustufenkamera, größer als 0,35, bevorzugt größer als 0,7 und besonders bevorzugt größer als 0,95 ist, wobei die fotographischen Aufnahmen vorzugsweise an einer Lichtleiste, welche acht LED umfasst, durchgeführt sind und die Bestimmung des Minimums der Intensität so durchgeführt ist, dass mindestens 4 LED rechts und vier LED links von der Position liegen, an der das Minimum bestimmt wird und der maximale Grauwert der beleuchteten Fläche nach Mittelung über eine Fläche von 5*5 Pixeln ca. 80% des maximal darstellbaren Grauwerts beträgt und die Intensitäten entlang der Linie bestimmt sind, indem über ein Rechteckt von mindestens 5*5 Pixeln gemittelt wird und die Länge des Rechtsecks in Richtung der Verbindungslinie der beiden äußeren LED a/20 beträgt und senkrecht hierzu a/2, und der Abstand der LED untereinander gleich dem Abstand der LED von dem Glas- oder Glaskeramikelement ist

Der Bereich mit verbesserter Sichtbarkeit für elektrooptische Anzeigeelemente kann weiter unterteilt werden. So kann es bei bestimmten Ausführungsformen der Erfindung dazu kommen, dass dort einzelne Elemente eines unterhalb des Glas- oder Glaskeramikelements angeordneten elektrooptischen Anzeigeelements, beispielsweise punktförmige Lichtquellen, weiterhin wahrgenommen werden, beispielsweise in Form eines "Lichthofs", welcher mit geringerer Helligkeit den zentralen, helleren Kern umgibt, der dem jeweiligen einzelnen Element zugehörig ist. Der Durchmesser eines solchen Lichthofs beträgt in der Regel wenige mm, beispielsweise 4 mm. Ein solcher Lichthof kann näherungsweise durch die in diesem Bereich vorliegende Lichtintensität beschrieben werden. Die Lichtintensität in diesem Teilbereich liegt dabei mindestens 5 Prozentpunkte über der Lichtintensität in den übrigen Bereichen des Bereichs mit verbesserter Sichtbarkeit und kann näherungsweise durch die Abmessung des auf die Unterseite des Glas- oder Glaskeramikelements fallenden Lichtfleckes gegeben sein. Somit kann der Bereich mit verbesserter Sichtbarkeit für elektrooptische Anzeigeelemente in mindestens zwei Teilbereiche unterteilt werden, nämlich in den Teilbereich, welcher außerhalb des Lichthofs (näherungsweise außerhalb des Radius des auf die Unterseite fallenden Lichtflecks) liegt sowie in den Teilbereich innerhalb des Lichthofs bzw. innerhalb des Radius des auf die Unterseite fallenden Lichtflecks liegt.

Gemäß einer weiteren Ausführungsform ist das Glas- oder Glaskeramikelement so ausgestaltet, dass die auf die Beleuchtungsintensität $I_0$ normierte Beleuchtungsintensität I der Anzeige eines im Gebrauch des Glas- oder Glaskeramikelements, beispielsweise als Kochfläche, unterhalb von dessen Unterseite angeordneten elektrooptischen Anzeigeelements in dem Bereich des Glas- oder Glaskeramikelements mit verbesserter Sichtbarkeit mindestens das 0,35fache, bevorzugt das 0,7fache, besonders bevorzugt das 0,9fache der Beleuchtungsintensität $I_0$ beträgt, welche senkrecht zur mindestens einen Lichtquelle vorliegt.

Bei Verwendung der erfindungsgemäßen Ausführungsform der Glaskeramik kann ein elektrooptisches Anzeigeelement verwendet werden, das aus mindestens einer Lichtquelle besteht. Bei Verwendung von im wesentlichen punktförmigen LED-Leuchten als Lichtquellen nimmt dabei das Verhältnis des Abstandes a zwischen dem Glas- oder Glaskeramikelement und dem elektrooptischen Anzeigeelement bzw. den mindestens zwei punktförmigen Lichtquellen des elektrooptischen Anzeigeelements zum Abstand d zwischen den mindestens zwei punktförmigen Lichtquellen bevorzugt einen Wert von 1 oder mehr an. Es gilt bevorzugt also:

$a/d \geq 1$

Insbesondere kann das Verhältnis a/d gleich 2 sein, sodass das Verhältnis $I_{min}/I_{max}$ 0,7 beträgt.

Gemäß der Erfindung weisen die Streupartikel eine mittlere Primärkorngröße zwischen 200 nm und 800 nm auf. Gemäß einer Ausführungsform der Erfindung weisen die Streupartikel einen Brechwert von größer als 1,6 auf bei 560 nm Wellenlänge sowie vorzugsweise eine mittlere Primärkorngröße zwischen 200 und 800 nm auf.

Besonders bevorzugt umfassen die Streupartikel $TiO_2$, $ZrO_2$, ZnO, ZnS, $PbCO_3$, $BaSO_4$ und/oder Mischungen daraus. Beispielsweise können die Streupartikel auch Lithopone umfassen, welches eine Mischung aus $BaSO_4$ und ZnS sowie ggf. bis zu 2 Gew.-% ZnO darstellt, wobei unterschiedliche Mischungsverhältnisse zwischen $BaSO_4$ und ZnS möglich sind.

Gemäß der Erfindung wird ein polyestermodifiziertes, kondensationsvernetzendes Silikonharz verwendet.

Im Rahmen der vorliegenden Erfindung werden als Silikonharz dabei Verbindungen bezeichnet, in welchen vernetzbare Moleküle vorliegen, wobei diese Moleküle Siliziumatome aufweisen, welche durch Sauerstoffatome miteinander verbunden sind. Weiterhin weisen diese Stoffe noch zusätzlich organische Bestandteile auf, die ebenfalls an die Siliziumatome gebunden sind, sowie gegebenenfalls noch weitere organische funktionale Gruppen. Ein solches Silikonharz ist in der Lage, unter Polymerisierung auszuhärten.

Die Schicht umfasst gemäß einer bevorzugten Ausführungsform der Erfindung einen Chromophoren oder eine Mischung von Chromophoren. Beispielsweise kann der Chromophor ausgebildet sein als Pigment oder als Farbstoff, wie ein lumineszierendes Pigment oder ein lumineszierender Farbstoff. Insbesondere kann ein solches Pigment ausgebildet sein als Y-dotierter Ce-YAG- oder LuAG- Partikel. Auf diese Weise kann durch die Auswahl einer geeigneten Beleuchtung, also durch Anpassung des Spektrums der ausgesandten elektromagnetischen Strahlung, sowie unter Berücksichtigung der Streueigenschaften der Schicht und unter Berücksichtigung der Lumineszenzeigenschaften des oder der lumineszierenden Chromophore und der Transmission des Glas- oder Glaskeramikelements der gewünschte Farbton der Beleuchtung eingestellt werden. Auch die Modifizierung dieses Farbtons durch weitere zwischen der Unterseite der Glaskeramik und dem elektrooptischen Anzeigeelement angebrachte Farbfilter, beispielsweise in Form farbfilternder Schichten, ist möglich.

Gemäß einer nochmals weiteren Ausführungsform der Erfindung ist daher zwischen dem Anzeigeelement und dem Glas- oder Glaskeramikelement mindestens eine weitere Schicht angeordnet.

Diese mindestens eine weitere Schicht kann unterschiedliche Funktionen aufweisen. Beispielsweise kann diese Schicht ausgebildet sind als optisch wirksame Schicht, beispielsweise als Farbfilter. Ebenfalls kann diese Schicht maskierenden Funktionen in der Form aufweisen, dass sie den Durchtritt von etwaig auftretendem gestreuten Licht unterhalb des Glas- oder Glaskeramikelements blockiert und so verhindert, dass außerhalb des vom Anzeigeelement zu hinterleuchtenden Bereiches liegende Bereiche der Glaskeramik von oben sichtbar werden.

Insbesondere kann gemäß einer Ausführungsform der Erfindung diese mindestens eine weitere Schicht als eine Immersionsschicht ausgebildet sein. Als eine Immersionsschicht wird hierbei eine Schicht verstanden, welche etwaige an der Unterseite des Glas- oder Glaskeramikelements befindliche Strukturen zumindest partiell verfüllt, um deren Sichtbarkeit zu verringern.

Bevorzugt beträgt die Dicke der Streupartikel umfassenden Schicht zwischen 1 und 50 $\mu$m, bevorzugt zwischen 4 und 10 $\mu$m.

Ein weiterer Aspekt der Erfindung betrifft ein Verfahren zur Herstellung eines Glas- oder Glaskeramikartikels, insbesondere mit verbesserter Sichtbarkeit für elektrooptische Anzeigeelemente. Das Verfahren umfasst dabei die folgenden Schritte:

> a. Bereitstellen eines Glas- oder Glaskeramikelements mit einer Oberseite und einer Unterseite
> b. Bereitstellen eines flüssigen Beschichtungsmittels, welches mindestens siliziumhaltiges Bindemittel, beispielsweise Silikonharz, ein Lösungsmittel sowie Streupartikel umfasst,
> c. Auftragen des flüssigen Beschichtungsmittels auf mindestens einen Bereich der Unterseite des Glas- oder Glaskeramikelements,
> d. Aushärten des Beschichtungsmittels, sodass eine Vernetzung des siliziumhaltigen Bindemittels, beispielsweise des Silikonharzes, erfolgt.

Bevorzugt erfolgt das Auftragen des flüssigen Beschichtungsmittels mittels Walzen, Gießen, Rakeln oder mittels eines Druckverfahrens, bevorzugt mittels Siebdruck oder InkJet-Druck. In einer weiteren Ausführungsform können genoppte Substrate auch ohne eine zusätzliche Immersionsschicht durch einen Sprühprozess mit dem flüssigen Beschichtungsmittel versehen werden.

Gemäß einer bevorzugten Ausführungsform wird das Beschichtungsmittel in einem Siebdruckverfahren aufgebracht, wobei das Auftragen mittels eines Siebs mit einer Fadenzahl zwischen 200 und 100 Fäden pro Zentimeter erfolgt, bevorzugt mit einer Fadenzahl von 180, 140 und 120 Fäden pro Zentimeter.

Das Aushärten des Beschichtungsmittels kann thermisch, durch IR-Strahlung oder durch UV-Strahlung erfolgen. Bevorzugt ist jedoch ein thermisches Aushärten, welche bei einer Temperatur zwischen 375 °C und 150 °C bei einer Dauer von mindestens 10 Minuten bis zu maximal 2 Stunden erfolgt. Bevorzugt erfolgte das Aushärten zwischen 275 °C und 180 °C. Besonders bevorzugt ist ein Aushärten bei 250 °C für eine Dauer von 30 Minuten bis einer Stunde.

Das flüssige Beschichtungsmittel, welches im Rahmen der vorliegenden Erfindung auch als Lack bezeichnet wird, wird durch das Aushärten in die Streupartikel umfassende Schicht oder Streuschicht überführt.

Gemäß der Erfindung wird als siliziumhaltige Beschichtungsmittel ein polyestermodifiziertes kondensationsvernetzendes Silikonharz verwendet.

Das Silikonharz weist dabei gemäß einer weiteren bevorzugten Ausführungsform der Erfindung funktionelle Gruppen auf. Als funktionalisierte organische Gruppen könnten z.B. Modifikationen durch Polyester, Polyacrylate, Epoxide, Vinyle, Acrylate, Methacrylate oder Alkane eingesetzt werden.

Gemäß einer weiteren bevorzugten Ausführungsform der Erfindung umfasst das Beschichtungsmittel mindestens ein oberflächenaktives Additiv, bevorzugt ein oberflächenaktives entlüftendes und/oder entschäumendes Additiv.

Als grenzflächenaktives Additiv wird im Rahmen der vorliegenden Erfindung eine Substanz verstanden, welche einem flüssigen Beschichtungsmittel in geringen Mengen, also im Bereich von weniger als 9 Gew.%, bezogen auf die Gesamtmasse des Beschichtungsmittels, zugesetzt wird, um den Gehalt an Blasen oder einer Zusammenballung von Blasen (Schaum) im Beschichtungsmittel zu mindern, beispielsweise durch die Auflösung bereits vorhandener Blasen. Insbesondere sind sogenannte entschäumende und entlüftende Additive als grenzflächenaktive Additive im Sinne der vorliegenden Erfindung zu verstehen.

Bevorzugt beträgt der Gesamtgehalt an Additiven, bezogen auf die Masse des Beschichtungsmittels zwischen 0,5 und 9 Gew.-%, beispielsweise zwischen 0,5 Gew.-% und 6 Gew.-%.

Weiterhin umfasst das Beschichtungsmittels gemäß einer weiteren Ausführungsform der Erfindung ein Hydrolysat einer organischen Verbindung eines Metalls und/oder eines Halbmetalls, bevorzugt ein Hydrolysat einer siliziumorganischen Verbindung.

Beispiele

Im Folgenden ist die Erfindung anhand von Ausführungsbeispielen erläutert.

Ausführungsbeispiel 1

0,08 mol Glycidyloxypropyltriethoxysilan (GPTES) und 0,02 mol Tetraethoxysilan (TEOS) werden mit 0,02 mol Wasser hydrolysiert, wobei dieses Wasser auch angesäuert vorliegen kann, beispielsweise durch Zugabe von para-Toluolsulfonsäure. Anschließend wird vorhandenes niedrigsiedendes Lösungsmittel, beispielsweise bei der Hydrolyse entstandenes Ethanol, am Rotationsverdampfer entfernt. Auf diese Weise werden 23,0 g Hydrolysat erhalten. Diesem werden unter ständigem Rühren 11,5 g polyestermodifiziertes Silikonharz zugegeben sowie weiterhin 1,0 g eines Entschäumers, 1,7 g Diethylenglykolmonothylether sowie 6,8 g $TiO_2$-Partikel zugegeben.

Das entstandene Beschichtungsmittel wird in einem Siebdruckverfahren auf die genoppte Unterseite eines Glaskeramikelements aufgetragen. Dabei sind die Noppenstrukturen dieser Unterseite in dem Bereich, in welchem der Lack aufgetragen wird, zumindest partiell mit einer dielektrischen Substanz verfüllt (sogenannte Immersionsschicht).

Für den Siebdruck der Streupartikel umfassenden Schicht wird ein Sieb mit einem 180er Gewebe, also einer Fadenzahl von 180 Fäden pro Zentimeter, verwendet. Das Aushärten erfolgt bei 250°C für eine Stunde, wobei das Aushärten das Vernetzen des siliziumhaltigen Bindemittels umfasst.

Die auf diese Weise erhaltene Beschichtung ermöglichte die Sichtbarkeit eines darunter befindlichen elektrooptischen Anzeigeelements auch bei streifender Betrachtung. Weiterhin war die Ausleuchtung des mit dieser Schicht belegten Bereichs homogen im dem Sinne, dass die auf die Beleuchtungsintensität $I_0$ normierte Intensität I einer Lichtquelle im gesamte zu hinterleuchtenden Bereich mindestens das 0,9fache der Lichtintensität $I_0$ betrug, vorausgesetzt, dass der Abstand der Einzelleuchten untereinander kleiner war als der Abstand des Anzeigeelements zur Glaskeramikunterseite.

Weiterhin wurde an den solcherart beschichteten Glaskeramikproben eine Untersuchung der Stoßfestigkeit vorgenommen. Hierbei ist die Stoßfestigkeit definiert als die Festigkeit des Glas- oder Glaskeramikelements, welche sich bei einer Stoßbelastung von oben, also vorliegend auf die Oberseite eines erfindungsgemäßen Glas- oder Glaskeramikelements, ergibt. Hierfür wurde ein sogenannter Kugelfalltest durchgeführt. Dafür wurden mindestens 5 Proben, welche laterale Abmessungen von 10*10 cm$^2$ sowie eine Dicke von etwa 4 mm aufwiesen, mit der Beschichtung entsprechend des Ausführungsbeispiels 1 versehen. Die Proben wurden sodann auf einen gummibelegten Auflagerahmen aufgelegt, wobei sichergestellt wurde, dass die Gummiauflage frei war von Glassplittern oder ähnlichen potentiell das Glas bzw. die Glaskeramik schädigenden Partikeln sowie weiterhin die Probe nicht am Rahmen eingeklemmt vorlag. Sodann wird in einem Fallgestell eine Stahlkugel mit einem Durchmesse von 36 mm sowie einer Masse von 200 g beginnend mit einer Fallhöhe von 5 cm im freien Fall auf die Oberfläche fallen gelassen. Die Fallhöhe ist dabei am Fallgestellt ablesbar und wird gemessen zwischen der Unterseite der Stahlkugel und der Oberseite der Probe. Die Fallhöhe wird sodann um jeweils 5 cm erhöht, bis es zum Bruch der Probe kommt. Notiert wird jeweils die letzte bestandene Fallhöhe. Die Festigkeit gilt als ausreichend, wenn der Mittelwert der letzten bestandenen Fallhöhe mehr als 65 cm beträgt.

Dieser Kugelfalltest wurde für die Proben des Ausführungsbeispiels 1 mit einem Wert von 110 cm bestanden.

Weiterhin wurden die Proben einer thermischen Belastung von 250°C über eine Dauer von 75 h unterzogen. Dabei kam es zu keiner Änderung der Schichteigenschaften.

Ausführungsbeispiel 2

11,5 g eines polyestermodifizierten Silikonharzes wurden unter Rühren mit 1,0 g eines Entschäumers sowie 1,7 g Diethylenglykolmonoethylether versetzt. Weiterhin wurden 2,8 g Streupartikel ($TiO_2$) zugegeben.

Das entstandene Beschichtungsmittel wurde mittels eines Siebdruckverfahrens auf die genoppte Unterseite eines Glaskeramikelements aufgetragen. Dabei sind die Noppenstrukturen dieser Unterseite in dem Bereich, in welchem der Lack aufgetragen wird, zumindest partiell mit einer dielektrischen Substanz verfüllt (sogenannte Immersionsschicht). Für den Siebdruck wird ein Sieb mit einem 180er Gewebe, also einer Fadenzahl von 180 Fäden pro Zentimeter, verwendet. Das Aushärten erfolgt bei 250°C für eine Stunde, wobei das Aushärten das Vernetzen des siliziumhaltigen Bindemittels umfasst.

Auch hierbei ermöglichte die auf diese Weise erhaltene Streuschicht die Sichtbarkeit eines darunter befindlichen elektrooptischen Anzeigeelements auch bei streifender Betrachtung. Weiterhin war die Ausleuchtung des mit dieser Schicht belegten Bereichs homogen im dem Sinne, dass die auf die Beleuchtungsintensität $I_0$ normierte Intensität I einer Lichtquelle im gesamten zu hinterleuchtenden Bereich mindestens das 0,9fache der Lichtintensität $I_0$ betrug, voraus-gesetzt, dass der Abstand der Einzelleuchten untereinander kleiner war als der Abstand des Anzeigeelements zur Glaskeramikunterseite.

Die Festigkeit der solcherart beschichteten Glaskeramikelemente betrug 140 cm. Die Schichten zeigten keine Veränderungen ihrer Eigenschaften bei einer thermischen Belastung von 270°C über 75 h.

Beschreibung der Zeichnungen

Im Folgenden ist die Erfindung anhand von Zeichnungen näher erläutert. Dabei bezeichnen gleiche Bezugszeichen gleiche oder gleichwertige Elemente.

Es zeigen:

Fig. 1 und 2      schematische und nicht maßstabsgetreue Abbildungen von Ausführungsformen erfindungsgemäßer Glas- oder Glaskeramikelementen,

Fig. 3      eine weitere schematische und nicht maßstabsgetreue Abbildung einer weiteren Ausführungsform eines erfindungsgemäßen Glas- oder Glaskeramikelements,

Fig. 4    eine Darstellung der normierten Lichtintensität in dem Bereich eines Glas- oder Glaskeramikelements, der von einem Anzeigegerät hinterleuchtet wird,

Fig. 5    eine fotographische Darstellung eines hinterleuchtenden Glas- oder Glaskeramikelements gemäß der vorliegenden Erfindung,

Fig. 6    die fotographische Darstellung hinterleuchteter Bereiche für unterschiedliche Glaskeramikelemente, sowie

Fig. 7    eine Darstellung des Phänomens der optischen Wanderung für erfindungsgemäße und nicht erfindungsgemäße Glas- oder Glaskeramikelemente.

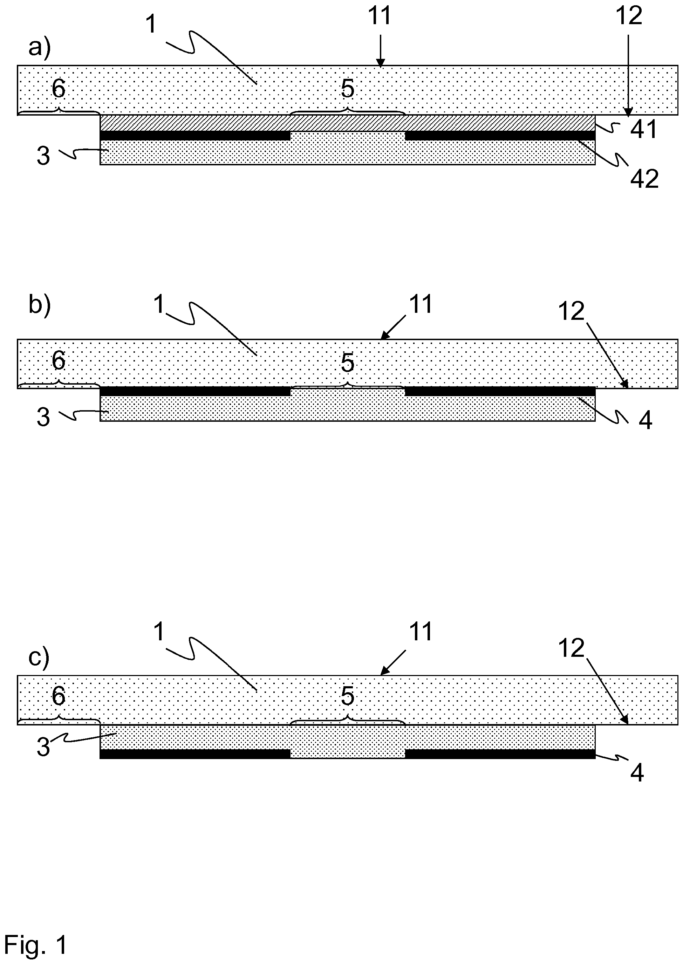

In Fig. 1 a) ist eine Ausführungsform eines erfindungsgemäßen Glas- oder Glaskeramikelements 1 dargestellt. Dieses verfügt über eine Oberseite 11, welche im Betrieb dem Benutzer zugewandt ist, sowie über eine Unterseite 12, welche im Betrieb vom Benutzer abgewandt ist. Unterhalb der Unterseite 12 ist ein Anzeigeelement 2 angeordnet, welches hier allerdings nicht dargestellt ist. Zwischen diesem und der Unterseite 12 ist eine Streupartikel umfassende Schicht 3 angeordnet, welche ein siliziumhaltiges Bindemittel umfasst. Weiterhin sind weitere Schichten 41, 42 zwischen dem hier nicht dargestellten elektrooptischen Anzeigeelement 2 sowie der Unterseite 12 angeordnet. Diese sind hier beispielhaft ausgebildet als Farbfilterschicht 41 sowie Maskierungsschicht 42. Mittels dieser Anordnung kann das Glas- oder Glaskeramikelement 1 in unterschiedliche Bereiche unterteilt werden. In Bereich 5 ist die Sichtbarkeit eines elektrooptischen Anzeigeelements 2 gegenüber dem Bereich 6, bei welchem keine Streupartikel enthaltende Schicht 3 zwischen der Unterseite 12 und dem Anzeigeelement 2 angeordnet ist, verbessert. In dem hier nicht bezeichneten, zwischen den Bereichen 5 und 6 liegendem Bereich ist aufgrund der Maskierungsschicht 42 überhaupt keine Sichtbarkeit eines elektrooptischen Anzeigeelements 2 gegeben. Die Maskierungsschicht 42 kann insbesondere so ausgeführt sein, dass Buchstaben, Ziffern, Logos, graphische Darstellungen etc., ausgespart sind und so eine Vielzahl möglicher Muster in Form einer leuchtenden Anzeige oder einer leuchtenden Fläche präsentiert werden können.

Weiterhin zeigt Fig. 1 b) eine weitere Ausführungsform des erfindungsgemäßen Glas- oder Glaskeramikelements 1. Hier ist zwischen der Unterseite 12 sowie dem nicht dargestellten elektrooptischen Anzeigeelement 2 die Streupartikel sowie ein siliziumhaltiges Bindemittel umfassende Schicht 3 angeordnet. In dem Bereich 5 ist somit die Sichtbarkeit für das Anzeigeelement 2 gegenüber dem Bereich 6 verbessert. In den nicht bezeichneten Bereichen zwischen dem Bereich 5 und dem Bereich 6, in welchem die Maskierungsschicht 42 direkt auf die Unterseite 12 des Glas- oder Glaskeramikelements 1 aufgebracht wurde, ist aufgrund der Maskierung keinerlei Sichtbarkeit gegeben. Weiterhin ist noch die Oberseite 11 des Glas- oder Glaskeramikelements 1 bezeichnet.

In Fig. 1 c) ist eine weitere schematische und nicht maßstabsgetreue Abbildung einer Ausführungsform eines erfindungsgemäßen Glas- oder Glaskeramikelements 1 zu sehen, wobei hierbei die Maskierungsschicht 4 auf die Streupartikel sowie ein siliziumhaltiges Bindemittel umfassende Schicht 3 aufgebracht wurde. Weiterhin bezeichnet sind die Bereiche 5 und 6 sowie die Unterseite 12 und die Oberseite 11 des Glas- oder Glaskeramikartikels 1.

Überraschenderweise hat sich gezeigt, dass gemäß einer Ausführungsform der Erfindung bei einer Ausgestaltung des Glas- oder Glaskeramikelements 1 mit verbesserter Sichtbarkeit für elektrooptische Anzeigeelemente in mindestens einem Bereich mit einer Schicht 3, welche Streupartikel mit einem Gehalt zwischen 0,1 und 25 Gew.-% umfasst, trotz des relativ hohen Gehalts an Bindemittel dennoch eine ausreichende Stoßfestigkeit erhalten wird, also eine Stoßfestigkeit von mehr als 65 cm im Mittelwert, vorzugsweise bestimmt an mindestens 5 Proben, welche laterale Abmessungen von 10*10 cm$^2$ sowie eine Dicke von etwa 4 mm aufweisen, durch eine Stahlkugel mit einem Durchmesse von 36 mm sowie einer Masse von 200 g.

Bevorzugt ist gemäß einer Ausführungsform der Erfindung das Glas- oder Glaskeramikelement 1 so ausgestaltet, dass sich die Eigenschaften der Beschichtung 3 bei thermischer Belastung nicht ändern, wobei als thermische Belastung insbesondere eine Dauerbelastung von mindestens 75 h bei einer Temperatur von mindestens 200°C, bevorzugt mindestens 250°C und besonders bevorzugt 270°C oder mehr bezeichnet wird. Insbesondere bevorzugt wird auch nach einer solchen thermischen Belastung oder Temperaturbelastung weiterhin eine ausreichende Stoßfestigkeit von mindestens 65 cm im Mittelwert erzielt, insbesondere bevorzugt ist weiterhin eine ausreichende Haftfestigkeit der Beschichtung auf dem Substrat gegeben und insbesondere bevorzugt kommt es zu keiner Veränderung der optischen Eigenschaften.

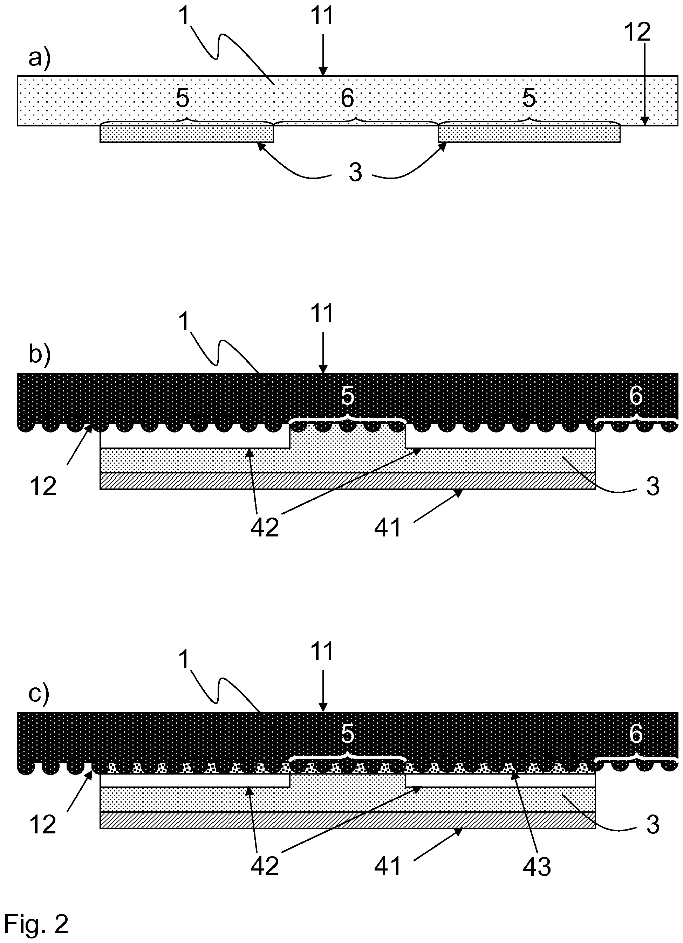

Fig. 2 a) zeigt eine weitere schematische und nicht maßstabsgetreue Darstellung einer Ausführungsform eines Glas- oder Glaskeramikartikels 1 gemäß der vorliegenden Erfindung. Bezeichnet sind hierbei die Bereiche 5, bei welchen die Sichtbarkeit für das (nicht abgebildete) elektrooptische Anzeigeelement 2 gegenüber dem Bereich 6 verbessert ist. In den Bereichen 5 ist dabei eine Schicht 3, welche Streupartikel sowie ein siliziumhaltiges Bindemittel umfasst, angeordnet.

In Fig. 2 b) ist eine weitere schematische und nicht maßstabsgetreue Darstellung einer Ausführungsform der Erfindung zu sehen. Der Glas- oder Glaskeramikartikel 1 weist hierbei eine Oberseite 11 sowie eine Unterseite 12 auf, wobei die Unterseite 12 hier genoppt ausgebildet ist. In dem Bereich 5 ist zwischen einem elektrooptischen Anzeigeelement 2 (nicht dargestellt) und der Unterseite 12 eine Streupartikel sowie ein siliziumhaltiges Bindemittel umfassende Schicht 3 angeordnet. Weiterhin sind hier die Schichten 42, welche eine maskierende Funktion aufweisen, sowie die Schicht 41, welche als Farbfilter fungiert, bezeichnet. Diese Schichten sind jeweils ebenfalls zwischen dem elektrooptischen Anzeigeelement 2 und der Unterseite 12 des Glas- oder Glaskeramikelements 1 angeordnet. In dem Bereich 5 ist die Sichtbarkeit für das elektrooptische Anzeigeelement 2 im Vergleich zu dem Bereich 6 verbessert. In dem zwischen dem Bereich 5 und dem Bereich 6 angeordneten, hier nicht bezeichneten Bereich, in welchem die Maskierungsschicht 42 angeordnet ist, ist dabei aufgrund der maskierenden Wirkung dieser Schicht keinerlei Sichtbarkeit eines elektrooptischen Anzeigeelements gegeben.

Schließlich zeigt Fig. 2 c) eine weitere schematische und nicht maßstabsgetreue Darstellung eines Glas- oder Glaskeramikelements 1 gemäß der vorliegenden Erfindung. Zusätzlich zu dem in Fig. 2 b) dargestellten Glas- oder Glaskeramikelement 1 ist hier weiterhin die Schicht 43 angeordnet, welche hier als sogenannte Immersionsschicht die Strukturen der Unterseite 12 zumindest teilweise verfüllt.

In Fig. 3 ist in schematischer und nicht maßstabsgetreuer Darstellung eine Abbildung eines Glas- oder Glaskeramikelements 1 aufweisend eine Oberseite 11 sowie eine Unterseite 12 zu sehen. Unterhalb der Unterseite 12 ist ein elektrooptisches Anzeigeelement 2 ausgebildet, welches hier beispielhaft verschiedene Lichtquellen 21 umfasst. Diese Lichtquellen sind zueinander im dem Abstand d voneinander positioniert. Weiterhin weist das elektrooptische Anzeigeelement 2 einen Abstand zur Unterseite 12 des Glas- oder Glaskeramikelements 12 von a auf, wobei sich dieser Abstand als der Abstand zwischen dem Anzeigeelement sowie der Unterseite 31 der Schicht 3 ergibt. In der Regel ist die Schichtdicke der Schicht 3 im Mikrometerbereich und damit so klein, dass näherungsweise der Abstand zwischen der Unterseite 12 und dem elektrooptischen Anzeigeelement a angenommen werden kann, welcher in der Regel mindestens 2 Größenordnungen über der Dicke der Schicht 3 oder der Summe der Schichtdicken der zwischen dem Unterseite 12 und dem Anzeigeelement 2 angeordneten Schichten liegt. Die Schicht 3 ist dabei in dem Bereich 5 angeordnet, in welchem eine verbesserte Sichtbarkeit für ein elektrooptisches Anzeigeelement 2 gegeben ist.

In Fig. 4 ist eine Darstellung der normierten Intensität der Lichtquellen 21 eines elektrooptischen Anzeigeelements 2 für einen hinterleuchteten Bereich eines Glas- oder Glaskeramikelements 1 zu sehen. Dabei zeigt die mit 7 bezeichnete Kurve die normierte Intensität I der Lichtquellen 21 für ein erfindungsgemäßes Glas- oder Glaskeramikelement 1, bei welchem das Verhältnis von a zu d mindestens 1 beträgt. Die normierte Intensität I beträgt hier immer mindestens das 0,9fache der Intensität $I_0$, welche bei senkrechter Betrachtung direkt oberhalb der Lichtquelle erfolgt, hier beispielhaft an den Positionen 4, 5, 6, 7, 8, 9 und 10. Die mit 8 bezeichnete Kurve des Intensitätsverlaufs zeigt dagegen die Schwankungen der Intensität, falls eine davon abweichende geometrische Anordnung der Lichtquellen 21 relativ zur Oberfläche 31 vorliegt.

Fig. 5 zeigt eine fotographische Darstellung eines hinterleuchteten Bereichs eines Glas- oder Glaskeramikelements gemäß der vorliegenden Erfindung. Diese Aufnahme wurde dabei unter einem Winkel von 80° zur Flächennormalen auf die Oberseite 11 des Glas- oder Glaskeramikelements 1 vorgenommen. Der hinterleuchtete Bereich ist auch bei streifender Betrachtung noch gut sichtbar.

Fig. 6 zeigt weiterhin die fotographischen Darstellungen zweier unterschiedlicher Glas- oder Glaskeramikelemente 1. In Fig. 6 a) ist dabei ein Glas- oder Glaskeramikelement 1 (nicht bezeichnet) zu sehen, welche in dem Bereich 5 mit einer Beschichtung versehen wurde. Dies ist daran ersichtlich, dass die Lichtquellen 21 bei der Betrachtung von oben weiterhin als solche deutlich erkennbar sind (siehe den beispielhaft gekennzeichneten Bereich 52, welcher eine Art Lichthof um die Lichtquelle 21 darstellt). Zwischen den beiden hier beispielhaft bezeichneten Bereichen 52 bzw. den beiden Lichthöfen, ist der Abstand I definiert, welcher ebenfalls bezeichnet ist. Außerhalb der Bereiche 52, von welchen hier lediglich zwei eingezeichnet sind, liegt der Bereich 51. Dabei unterscheiden sich die Streupartikel umfassende Beschichtung des Bereichs 5 der Fig. 6 a) und der Fig. 6 b) durch den Anteil der Streupartikel. Beispielhaft beträgt der Durchmesser der hier bezeichneten Bereiche 52 oder Lichthöfe 4 mm. Dieser Wert variiert jedoch je nach Art der eingesetzten Lichtquelle.

In der unteren fotographischen Abbildung eines Glas- oder Glaskeramikelements 1 handelt es sich um die Darstellung eines Glas- oder Glaskeramikelements 1 mit einer Streuschicht 3 gemäß einer bevorzugten Ausführungsform der Erfindung in dem Bereich mit verbesserter Sichtbarkeit für ein elektrooptisches Anzeigeelement 5. Auch hier sind die Bereiche 52 angedeutet, diese können allerdings nicht mehr visuell von den Bereichen 51 unterschieden werden. Der gesamte Bereich 5 ist somit homogen ausgeleuchtet.

Um die Lichtpunktauflösung zu bewerten, können die Helligkeitswerte aus den fotographischen Aufnahmen der Lichtleisten, welche beispielhaft in Fig. 6 abgebildet sind, ausgewertet werden. Eine geeignete Kenngröße ist das Verhältnis von minimaler Intensität zu maximaler Intensität entlang der Verbindungslinie der LED zwischen den beiden äußeren LED, $I_{min}/I_{max}$.

Entsprechende Werte sind in der nachfolgenden Tabelle aufgelistet. Die Proben 19 bis 22 sind nicht erfindungsgemäß.

| Probe Nr. | Streuschicht-Parameter | | | | | | Unsichtbarkeit der Noppen | Lichtpunktauflösung $I_{Min}/I_{Max}$ |
| --- | --- | --- | --- | --- | --- | --- | --- | --- |
| | Partikel | Anteil | LM-Zusatz | Partikelgröße | Sieb | Temp. | | |
| 1 | TiO$_2$ | 10% | 5% | 0,3 µm | 140 | 200 | o | 0,88 |
| 2 | TiO$_2$ | 10% | 5% | 0,3 µm | 140 | 250 | + | 0,88 |
| 3 | TiO$_2$ | 15% | 5% | 0,3 µm | 140 | 200 | o | 0,98 |
| 4 | TiO$_2$ | 15% | 5% | 0,3 µm | 140 | 250 | + | 0,98 |
| 5 | TiO$_2$ | 20% | 5% | 0,3 µm | 140 | 200 | o | 0,99 |
| 6 | TiO$_2$ | 20% | 5% | 0,3 µm | 140 | 250 | + | 0,99 |
| 7 | R320 | 10% | 5% | 0,21 µm | 140 | 200 | + | 0,89 |
| 8 | R320 | 10% | 5% | 0,21 µm | 140 | 250 | o | 0,89 |
| 9 | R320 | 15% | 5% | 0,21 µm | 140 | 200 | + | 0,95 |
| 10 | R320 | 15% | 5% | 0,21 µm | 140 | 250 | + | 0,95 |
| 11 | R320 | 20% | 5% | 0,21 µm | 140 | 200 | + | 0,99 |
| 12 | R320 | 20% | 5% | 0,21 µm | 140 | 250 | + | 0,99 |
| 13 | R320 | 20% | | 0,21 µm | 180 | 200 | o | 0,98 |
| 14 | R320 | 20% | | 0,21 µm | 180 | 250 | + | 0,98 |
| 15 | R320 | 20% | 5% | 0,21 µm | 140 | 200 | + | 0,98 |
| 16 | R320 | 20% | 5% | 0,21 µm | 140 | 250 | + | 0,97 |
| 17 | R320 | 20% | 5% | 0,21 µm | 140 | 200 | + | 0,98 |
| 18 | R320 | 20% | 5% | 0,21 µm | 140 | 250 | o | 0,98 |
| 19 | TiO$_2$-haltig | 21 % | 10% | 10 µm | 100 | 380 | Glattes Substrat | 0,37 |
| 20 | TiO$_2$-haltig | 21 % | 10% | 10 µm | 100 | 380 | o | 0,39 |
| 21 | TiO$_2$-haltig | 21 % | 10% | 10 µm | 54 | 380 | Glattes Substrat | 0,62 |
| 22 | TiO$_2$-haltig | 37 % | 10% | 1 µm | 77 | 380 | - | 0,87 |

Hierbei sind in der Spalte "Partikel" die verwendeten Partikel aufgeführt, wobei es sich hierbei um zwei verschiedene Titandioxid-Varianten sowie um $TiO_2$-haltige Partikel handelt. Der Kürze halber wurden die Streupartikel in der Tabelle lediglich als "Partikel" bezeichnet. Der Anteil ist in Gew.-% angegeben. Weiterhin bezeichnet LM ein Lösungsmittel, welches dem flüssigen Beschichtungsmittel gegebenenfalls zugegeben wird, und ist ebenfalls in Gew.-% angegeben. Hinsichtlich des Siebes ist die verwendete Maschenzahl angegeben. Die Temperatur ist in °C angegeben und bezeichnet die Einbrandtemperatur.

Werden die solcherart hergestellten Proben visuell untersucht, ergibt sich, dass für Verhältnisse $I_{min}/I_{max}$ von mehr als 0,95 die einzelnen punktförmigen Lichtquellen 21 nicht mehr als "sichtbar" eingeschätzt werden, d.h. also die "Lichthöfe" bzw. Bereiche 52 nicht mehr als solche wahrnehmbar sind.

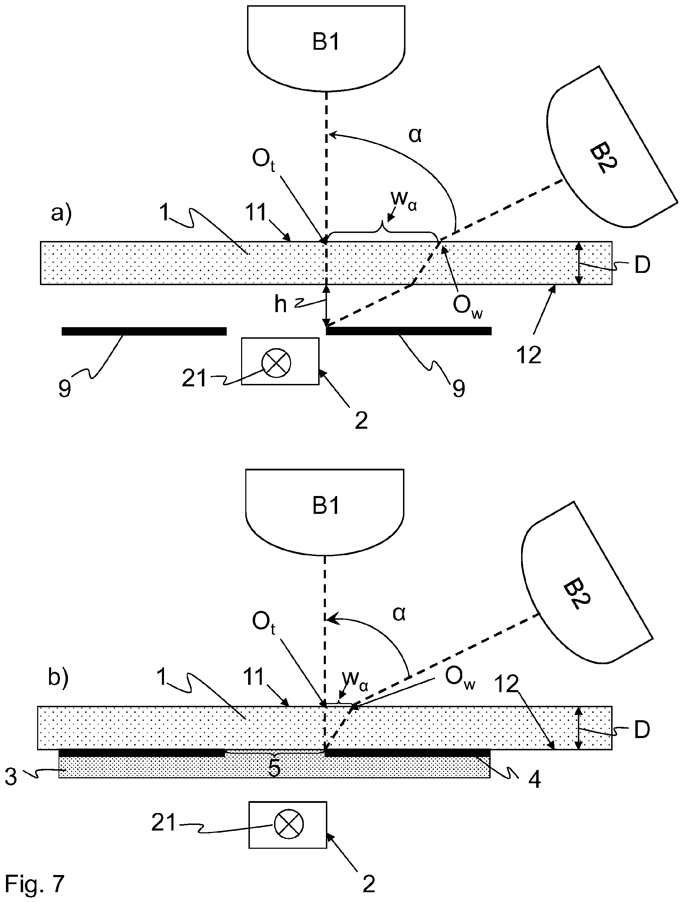

Die fotographischen Aufnahmen sind hier mit einer Graustufenkamera erfolgt. Es wurde die für das menschliche Auge relevante Helligkeit ermittelt. Bei der fotographischen Aufnahme wurde die Geometriebedingung beachtet, dass der Abstand der LED untereinander gleich dem Abstand der LED von dem Glas- oder Glaskeramikelement ist, d.h. d = a in Fig. 3. Die LED-Leiste liegt dabei auf einem metallischen Untergrund, welche beispielsweise aus gebürstetem Aluminium ausgebildet sein kann. die Leiste umfasst mindestens 8 LED mit einem spezifizierten Abstrahlwinkel von 120°. Eine geeignete Kenngröße ist das Verhältnis von maximaler Intensität zu minimaler Intensität entlang der Verbindungslinie der LED zwischen den beiden äußeren LED ($I_{min}/I_{max}$). Die Linie, entlang derer die Intensitäten ermittelt werden, wird definiert durch die Intensitätsmaxima der Beleuchtung, die durch die beiden äußeren LED erzeugt werden (= Anfangs- und Endpunkt der geraden Linien). Die fotographischen Grauwertaufnahmen wurden so durchgeführt, dass der maximale Grauwert der beleuchteten Fläche nach Mittelung über eine Fläche von 5*5 Pixeln ca. 80% des maximal darstellbaren Grauwerts beträgt. Die Intensitäten wurden entlang der Linie ermittelt, indem über ein Rechteckt von mindestens 5*5 Pixeln gemittelt wurde. Dabei soll die Länge des Rechtsecks in Richtung der Verbindungslinie der beiden äußeren LED a/20 betragen und senkrecht hierzu a/2. Die Positionen der LED sollen aus der gleichen fotographischen Aufnahme ermittelt werden. Die Bestimmung des Minimums der Intensität wurde so durchgeführt, dass mindestens 4 LED rechts und vier LED links von der Position liegen, an der das Minimum bestimmt wird. Die verwendete Kamera ist ausgebildet als eine acA1920 - 40 $\mu$m / Graustufenkamera der Basler AG und das Objektiv ist ausgebildet als LM35HC Megapixel der Kowa GmbH. Alternativ können Kamera und Objektiv mit vergleichbaren optischen und messtechnischen Eigenschaften verwendet werden. Bei der verwendeten Grauwertmesseinrichtung wurde das Graustufenbild im vorliegenden Beispiele mit Hilfe der Bildauswertungssoftware Halcon SDK Industry 12 der MVTec Software GmbH ausgewertet. Weiterhin ist in Fig. 7 das Phänomen der sogenannten "optischen Wanderung" genauer dargestellt.

Fig. 7 a) und b) zeigen hier jeweils in schematischer und nicht maßstabsgetreuer Darstellung ein Glas- oder Glaskeramikelement 1, welches vorliegend beidseitig glatt ausgebildet ist. Das Glas- oder Glaskeramikelement 1 weist weiterhin die den beiden Betrachtern B1 und B2 zugewandte Oberseite 11 sowie die den Betrachtern B1, B2 abgewandte Unterseite 12 auf. Die Dicke des Glas- oder Glaskeramikelements 1 hat hier den Wert D.

In Fig. 7 a), welches ein nicht erfindungsgemäßes Glas- oder Glaskeramikelement 1 zeigt, ist in einem Abstand h von der Unterseite 12 des Glas- oder Glaskeramikelements 1 eine Maskierung 9 angeordnet, wobei allerdings eine solche Maskierung 9, beispielsweise in Form einer Blende, nicht zwingend vorhanden sein muss. Zwischen den beiden Maskierungen 9 ist das Anzeigeelement 2 angeordnet, hier beispielhaft dargestellt als mindestens eine punktförmige Lichtquelle 21 umfassend.

Allgemein, ohne Beschränkung auf das hier dargestellte Beispiel eines Anzeigeelements 2, welches mindestens eine punktförmige Lichtquelle 21 umfasst, kann das Anzeigeelement aber auch als Display ausgebildet sein.

Das Glas- oder Glaskeramikelement 1 wird hier hinterleuchtet, wobei das Licht vom Anzeigeelement 2 ausgeht, welches zwischen den beiden Maskierungen 9 angeordnet ist.

Je nachdem unter welchem Winkel die Betrachtung der hinterleuchteten Glaskeramik erfolgt, erscheint nun der Ort der hinterleuchteten Stelle zu "wandern". Der Betrachtungswinkel $\alpha$ bezeichnet hierbei den Winkel, welcher zwischen der Betrachtungsrichtung und der Flächennormalen eingeschlossen wird (Betrachtungswinkel).

Unter der Wanderung des Ortes des Anzeigeelements 2 bzw. der hinterleuchteten Stelle wird hierbei verstanden, dass der tatsächliche Ort des Anzeigeelements Ot vom wahrgenommenen Ort $O_w$ abweicht, und zwar um die Abweichung $W_\alpha$. $O_w$ ist hierbei in Fig. 7 a) lediglich für den Betrachter B2 bezeichnet.

In Fig. 7 a) betrachtet der Betrachter B1 die Glaskeramik unter einem Winkel $\alpha$ = 0°. Der tatsächliche Ort Ot des Anzeigeelements 2 und die Projektion des Anzeigeelements 2 auf das Glas- oder Glaskeramikelement 1, also der wahrgenommene Ort $O_w$, treffen damit zusammen, d.h. die Abweichung $W_\alpha$ für a = 0° ist 0. Beim Betrachter B2, welcher das Glas- oder Glaskeramikelement 1 unter einem Winkel $\alpha \neq 0°$ betrachtet, kommt es bedingt durch die Lichtbrechung an dem Glas- oder Glaskeramikelement 1 dazu, dass der tatsächliche Ort der Lichtquelle und die Projektion auf die Glaskeramik nicht mehr aufeinander fallen. Vielmehr weicht der tatsächliche Ort des Anzeigeelements vom scheinbaren Ort ab, und zwar um die Abweichung $W_\alpha$. Diese berechnet sich im Fall der in Fig. 7 a) dargestellten Anordnung zu

$$(1) \quad w_\alpha = D\frac{\sin\alpha}{\sqrt{n^2 - \sin^2\alpha}} + h\frac{\sin\alpha}{\sqrt{1 - \sin^2\alpha}}.$$

In Fig. 7 b), in welcher ein erfindungsgemäßes Glas- oder Glaskeramikelement 1 dargestellt ist, ist auf dessen Unterseite 12 eine Streupartikel umfassende Schicht 3 in dem Bereich 5 angeordnet. Durch diese Schicht 3 wird die optische Wanderung reduziert und die Abweichung $W_\alpha$ ergibt sich für den Betrachter B2, welcher das Glas- oder Glaskeramikelement 1 unter dem Winkel $\alpha$ betrachtet, lediglich zu

$$(2) \quad w_\alpha = D\frac{\sin\alpha}{\sqrt{n^2 - \sin^2\alpha}}.$$

Die Abweichung $W_\alpha$, bestimmt durch den Abstand von $O_t$ und $O_w$, welche hierbei in Fig. 7 b) ebenfalls lediglich für den Betrachter B2 bezeichnet ist, ist hier somit deutlich lediglich durch die Dicke der Glaskeramik bestimmt und gegenüber dem Fall in Fig. 7 a) deutlich reduziert, da der Abstand zwischen dem Anzeigeelement bzw. der Lichtquelle und der Unterseite des Glas- oder Glaskeramikelements 1 nicht mehr von Belang ist.

Bezugszeichenliste

| | |
|---|---|
| 1 - | Glas- oder Glaskeramikelement |
| 11 - | Oberseite des Glas- oder Glaskeramikelements |
| 12 - | Unterseite des Glas- oder Glaskeramikelements |
| 2 - | elektrooptisches Anzeigeelement |
| 21 - | Lichtquelle im elektrooptischen Anzeigeelement |
| 3 - | Streupartikel umfassende Schicht |
| 31 - | Unterseite der Schicht 3 |
| 4 - | weitere Schicht |
| 41 - | Schicht 4, ausgebildet als Farbfilterschicht |
| 42 - | Schicht 4, ausgebildet als Maskierungsschicht |
| 43 - | Schicht 4, ausgebildet als Immersionsschicht |
| 5 - | Bereich mit verbesserter Sichtbarkeit |
| 51 - | Bereich innerhalb Bereich 5, außerhalb der Lichthöfe 52 |
| 52 - | Bereich innerhalb Bereich 5, Lichthof |
| 6 - | Bereich mit unveränderter Sichtbarkeit |
| 7, 8 - | Verlauf der normierten Intensität I in einem hinterleuchteten Bereich |
| 9 - | Maskierung |
| B1, B2 - | Betrachter |
| $\alpha$ - | Betrachtungswinkel |
| $W_\alpha$ - | Abweichung |
| $O_t$ - | tatsächlicher Ort der Lichtquelle/des Anzeigeelements |
| $O_w$ - | wahrgenommener Ort der Lichtquelle/des Anzeigeelements |
| h - | Abstand zwischen Lichtquelle/Anzeigeelement und Unterseite des Glas- oder Glaskeramikelements |
| D - | Dicke des Glas- oder Glaskeramikelements |

**Patentansprüche**

1. Glas- oder Glaskeramikelement mit verbesserter Sichtbarkeit für elektrooptische Anzeigeelemente in mindestens einem Bereich (5), zur Verwendung als Kochfläche, aufweisend

eine Oberseite (11) und
eine Unterseite (12),
wobei als Oberseite (11) die Seite des Glas- oder Glaskeramikelements (1) bezeichnet ist, welche in dessen Gebrauch dem Benutzer zugewandt ist, und

als Unterseite (12) diejenige Seite, welche im Gebrauch dem Benutzer abgewandt ist,

sowie auf der Unterseite (12) zumindest in dem Bereich (5) mit verbesserter Sichtbarkeit für elektrooptische Anzeigeelemente, mindestens eine Schicht (3), welche einen Gehalt von Streupartikeln zwischen 0,1 und 25 Gew.-% sowie ein polyestermodifiziertes, kondensationsvernetzendes Silikonharz aufweist, wobei die Transmission $T_b$ in dem Bereich (5) mit verbesserter Sichtbarkeit für elektrooptische Anzeigeelemente für elektromagnetische Strahlung im Wellenlängenbereich von 380 nm bis 780 nm zwischen 15 % und 30 % der Transmission $T_u$ eines unbeschichteten Bereichs (6) des Glas- oder Glaskeramikelements (1) beträgt, und wobei die Streupartikel eine mittlere Primärkorngröße zwischen 200 nm und 800 nm aufweisen.

2. Glas- oder Glaskeramikelement (1) nach Anspruch 1, wobei die Stoßfestigkeit des Glas- oder Glaskeramikelements (1) mindestens 65 cm im Mittelwert beträgt, vorzugsweise bestimmt an mindestens 5 Proben, welche laterale Abmessungen von 10*10 cm$^2$ sowie eine Dicke von etwa 4 mm aufweisen, durch eine Stahlkugel mit einem Durchmesser von 36 mm sowie einer Masse von 200 g.

3. Glas- oder Glaskeramikelement (1) nach einem der Ansprüche 1 oder 2, wobei sich bestimmte Eigenschaften der Beschichtung bei thermischer Belastung nicht ändern, wobei als thermische Belastung insbesondere eine Dauerbelastung von mindestens 75 h bei einer Temperatur von mindestens 200°C, bevorzugt mindestens 250°C und besonders bevorzugt 270°C oder mehr bezeichnet wird, und wobei insbesondere bevorzugt auch nach einer solchen thermischen Belastung oder Temperaturbelastung weiterhin eine ausreichende Stoßfestigkeit von mindestens 65 cm im Mittelwert erzielt wird, insbesondere bevorzugt weiterhin eine ausreichende Haftfestigkeit der Beschichtung auf dem Substrat gegeben ist und insbesondere bevorzugt es zu keiner Veränderung der optischen Eigenschaften kommt.

4. Glas- oder Glaskeramikelement (1) nach einem der Ansprüche 1 bis 3, wobei der Anzeigeort eines Anzeigeelements (2) bei streifender Betrachtung unter einem Winkel a, ($O_w$), im Vergleich zum Anzeigeort bei senkrechter Betrachtung, ($O_t$), sich um eine Abweichung $W_\alpha$ verschiebt, welche sich aus der folgenden Gleichung ergibt:

$$w_\alpha = D \frac{\sin\alpha}{\sqrt{n^2 - \sin^2\alpha}}$$

wobei D die Dicke des Glas- oder Glaskeramikelements (1) und n den Brechwert des Glases bezeichnet.

5. Glas- oder Glaskeramikelement (1) nach eine der Ansprüche 1 oder 2, wobei der Haze-Wert in dem Bereich (5) mehr als 95% beträgt, vorzugsweise bestimmt durch Messung mit einem Messgerät Haze Guard Dual.

6. Glas- oder Glaskeramikelement (1) nach einem der Ansprüche 1 bis 5, wobei das Verhältnis von maximaler Intensität zu minimaler Intensität entlang der Verbindungslinie der LED zwischen den beiden äußeren LED, $I_{min}/I_{max}$, wobei die Intensität jeweils bestimmt ist als Helligkeit mittels einer Graustufenkamera, größer als 0,35, bevorzugt größer als 0,7 und besonders bevorzugt größer als 0,95 ist.

7. Glas- oder Glaskeramikelement (1) nach einem der Ansprüche 1 bis 6, wobei im Gebrauch des Glas- oder Glaskeramikelements die auf die Beleuchtungsintensität $I_0$ normierte Beleuchtungsintensität I der Anzeige eines unterhalb von dessen Unterseite angeordneten elektrooptischen Anzeigeelements (2) in dem Bereich (5) mit verbesserter Sichtbarkeit, mindestens das 0,35fache, bevorzugt das 0,7fache, besonders bevorzugt das 0,9fache der Beleuchtungsintensität $I_0$ beträgt, welche senkrecht zur mindestens einen Lichtquelle (21) vorliegt.

8. Glas- oder Glaskeramikelement (1) nach Anspruch 7, wobei die mindestens eine Lichtquelle (21) als punktförmige Lichtquelle ausgebildet ist.

9. Glas- oder Glaskeramikelement (1) nach einem der Ansprüche 7 bis 8, wobei im Gebrauch des Glas- oder Glaskeramikelements das elektrooptische Anzeigeelement (2) mindestens zwei punktförmige Lichtquellen (21) aufweist, welche zueinander mit dem Abstand d angeordnet sind, und wobei bevorzugt das Verhältnis des Abstandes a zwischen dem Glas- oder Glaskeramikelement (1) und den mindestens zwei punktförmigen Lichtquellen (21) zum Abstand d zwischen den mindestens zwei punktförmigen Lichtquellen (21) einen Wert von 1 oder mehr annimmt.

**10.** Glas- oder Glaskeramikelement (1) nach einem der Ansprüche 1 bis 9, wobei die Streupartikel einen Brechwert von größer als 1,6 auf bei 560 nm Wellenlänge aufweisen.

**11.** Glas- oder Glaskeramikelement (1) nach einem der Ansprüche 1 bis 10, wobei die Streupartikel $TiO_2$, $ZrO_2$, ZnO, ZnS, $PbCO_3$, $BaSO_4$ und/oder Mischungen daraus, beispielsweise Lithopone, umfassen.

**12.** Glas- oder Glaskeramikelement (1) nach einem der Ansprüche 1 bis 11, wobei die Schicht (3) einen Chromophoren oder eine Mischung von Chromophoren umfasst, beispielsweise ein lumineszierendes Pigment und/oder einen lumineszierenden Farbstoff.

**13.** Glas- oder Glaskeramikelement (1) nach einem der Ansprüche 1 bis 12, wobei im Gebrauch des Glas- oder Glaskeramikelements zwischen dem Anzeigeelement (2) und dem Glas- oder Glaskeramikelement (1) mindestens eine weitere Schicht (4, 41, 42, 43) angeordnet ist.

**14.** Glas- oder Glaskeramikelement (1) nach einem der Ansprüche 1 bis 13, wobei die Dicke der Schicht (3) zwischen 1 und 50 μm beträgt, bevorzugt zwischen 4 und 10 μm.

**15.** Verfahren zur Herstellung eines Glas- oder Glaskeramikelements (1) mit verbesserter Sichtbarkeit für elektrooptische Anzeigeelemente (2) in mindestens einem Bereich (5) nach einem der vorstehenden Ansprüche 1 bis 14, umfassend die folgenden Schritte:

a. Bereitstellen eines Glas- oder Glaskeramikelements (1) mit einer Oberseite (11) und einer Unterseite (12),
b. Bereitstellen eines flüssigen Beschichtungsmittels, welches mindestens ein polyestermodifiziertes, kondensationsvernetzendes Silikonharz, ein Lösungsmittel sowie Streupartikel umfasst,
c. Auftragen des flüssigen Beschichtungsmittels auf den mindestens einen Bereich (5) der Unterseite (12) des Glas- oder Glaskeramikelements (1)
d. Aushärten des Beschichtungsmittels, sodass eine Vernetzung des Silikonharzes erfolgt.

**16.** Verfahren nach Anspruch 15, wobei das Aushärten thermisch bei einer Temperatur zwischen 375°C und 150°C bei einer Dauer von mindestens 10 Minuten bis zu maximal 2 Stunden erfolgt, bevorzugt zwischen 275°C und 180°C sowie besonders bevorzugt 250°C für eine Dauer von 30 Minuten bis zu einer Stunde.

**17.** Verfahren nach einem der Ansprüche 15 oder 16, wobei das Silikonharz funktionelle Gruppen aufweist.

**18.** Verfahren nach einem der Ansprüche 15 bis 17, wobei das Beschichtungsmittel ein Hydrolysat einer organischen Verbindung eines Metalls und/oder eines Halbmetalls umfasst, bevorzugt ein Hydrolysat einer siliziumorganischen Verbindung.

**Claims**

**1.** A glass or glass ceramic element with improved visibility for electro-optical display elements in at least one area (5) for use as a cooking surface, comprising

an upper surface (11); and
a lower surface (12);
the upper surface (11) being the side of the glass or glass ceramic element (1) facing the user during use, and the lower surface (12) being the side facing away from the user during use; and
wherein the lower surface (12) has at least one layer (3) at least in the area (5) with improved visibility for electro-optical display elements, which includes a content of scattering particles between 0.1 and 25 wt% and a polyester-modified condensation-crosslinking silicone resin, wherein the area (5) with improved visibility for electro-optical display elements exhibits transmittance $T_b$ for electromagnetic radiation in the wavelength range from 380 nm to 780 nm between 15 % and 30 % of the transmittance $T_u$ of a non-coated area (6) of the glass or glass ceramic element (1), and wherein the scattering particles have an average primary grain size between 200 nm and 800 nm.

**2.** The glass or glass ceramic element (1) according to claim 1, wherein the glass or glass ceramic element (1) has an impact resistance of at least 65 cm on average, preferably determined on at least 5 samples which have lateral dimensions of 10 * 10 cm$^2$ and a thickness of about 4 mm, using a steel ball with a diameter of 36 mm and a mass of 200 g.

3. The glass or glass ceramic element (1) according to any one of claims 1 or 2, wherein particular properties of the coating do not change under thermal load, thermal load referring to a continuous load during at least 75 h at a temperature of at least 200 °C, preferably at least 250 °C, and most preferably 270 °C or more, and wherein particularly preferably even after such a thermal load or temperature load a sufficient impact resistance of at least 65 cm on average continues to be achieved, furthermore particularly preferably a sufficient adhesive strength of the coating on the substrate is provided, and particularly preferably there is no change in the optical properties resulting.

4. The glass or glass ceramic element (1) according to any one of claims 1 to 3, wherein the display location of a display element (2) when viewed glancing under an angle a, ($O_w$), compared to the display location when viewed vertically, ($O_t$), is offset by a deviation $W_\alpha$, which results from the following equation:

$$W_\alpha = D \frac{\sin\alpha}{\sqrt{n^2 - \sin^2\alpha}}$$

where D denotes the thickness of the glass or glass ceramic element (1) and n is the refractive index of the glass.

5. The glass or glass ceramic element (1) according to any one of claims 1 or 2, wherein the haze value in the area (5) is more than 95 %, preferably determined by measurement using a Haze Guard Dual measuring device.

6. The glass or glass ceramic element (1) according to any one of claims 1 to 5, wherein the ratio of maximum intensity to minimum intensity along the LED connecting line between the two outer LEDs, $I_{min}/I_{max}$, is greater than 0.35, preferably greater than 0.7, and most preferably greater than 0.95, wherein the respective intensity is determined as brightness using a grayscale camera.

7. The glass or glass ceramic element (1) according to any one of claims 1 to 6, wherein during use of the glass or glass ceramic element, the illumination intensity I normalized to the illumination intensity $I_0$ of the display of an electro-optical display element (2) arranged below the lower surface in the area (5) with improved visibility is at least 0.35 times, preferably 0.7 times, most preferably 0.9 times the illumination intensity $I_0$ which is given perpendicular to the at least one light source (21).

8. The glass or glass ceramic element (1) according to claim 7, wherein the at least one light source (21) is in the form of a point-like light source.

9. The glass or glass ceramic element (1) according to any one of claims 7 to 8, wherein during use of the glass or glass ceramic element, the electro-optical display element (2) comprises at least two point-like light sources (21) which are arranged at a distance d from each other, and wherein preferably the ratio of the distance a between the glass or glass ceramic element (1) and the at least two point-like light sources (21) to the distance d between the at least two point-like light sources (21) assumes a value of 1 or more.

10. The glass or glass ceramic element (1) according to any one of claims 1 to 9, wherein the scattering particles have a refractive index of greater than 1.6 at a wavelength of 560 nm.

11. The glass or glass ceramic element (1) according to any one of claims 1 to 10, wherein the scattering particles comprise $TiO_2$, $ZrO_2$, ZnO, ZnS, $PbCO_3$, $BaSO_4$, and/or mixtures thereof, for example lithopone.

12. The glass or glass ceramic element (1) according to any one of claims 1 to 11, wherein the layer (3) comprises a chromophore or a mixture of chromophores, for example a luminescent pigment and/or a luminescent dye.

13. The glass or glass ceramic element (1) according to any one of claims 1 to 12, wherein during use of the glass or glass ceramic element, at least one further layer (4, 41, 42, 43) is disposed between the display element (2) and the glass or glass ceramic element (1).

14. The glass or glass ceramic element (1) according to any one of claims 1 to 13, wherein the layer (3) has a thickness between 1 and 50 $\mu$m, preferably between 4 and 10 $\mu$m.

**15.** A method for producing a glass or glass ceramic element (1) with improved visibility for electro-optical display elements (2) in at least one area (5) according to any one of the preceding claims 1 to 14, comprising the steps of:

> a. providing a glass or glass ceramic element (1) having an upper surface (11) and a lower surface (12);
> b. providing a liquid coating agent which comprises at least one polyester-modified condensation-crosslinking silicone resin, a solvent, and scattering particles;
> c. applying the liquid coating agent onto the at least one area (5) of the lower surface (12) of the glass or glass ceramic element (1);
> d. curing the coating agent so that the silicone resin crosslinks.

**16.** The method according to claim 15, wherein the curing is effected thermally at a temperature between 375 °C and 150 °C for a duration of at least 10 minutes up to a maximum of 2 hours, preferably between 275 °C and 180 °C, and most preferably at 250 °C for a duration of 30 minutes up to one hour.

**17.** The method according to any one of claims 15 or 16, wherein the silicone resin has functional groups.

**18.** The method according to any one of claims 15 to 17, wherein the coating agent comprises a hydrolysate of an organic compound of a metal and/or a semimetal, preferably a hydrolysate of an organosilicon compound.

## Revendications

**1.** Elément en verre ou en vitrocéramique avec une meilleure visibilité pour des éléments d'affichage électro-optiques dans au moins une zone (5), destiné à une utilisation comme plan de cuisson, présentant
une face supérieure (11) et
une face inférieure (12),
sachant que l'on désigne comme face supérieure (11) la face de l'élément en verre ou en vitrocéramique (1) qui est tournée vers l'utilisateur lors de son utilisation, et comme face inférieure (12) la face qui est tournée dans le sens opposé à l'utilisateur, lors de l'utilisation,
ainsi que, sur la face inférieure (12), au moins dans la zone (5) à visibilité améliorée pour des éléments d'affichage électro-optiques, au moins une couche (3) qui présente une teneur en particules de diffusion comprise entre 0,1 et 25 % en poids, ainsi qu'une résine silicone modifiée polyester, réticulant par condensation, sachant que la transmission $T_b$, dans la zone (5) à visibilité améliorée pour des éléments d'affichage électro-optiques, pour un rayonnement électromagnétique dans la plage de longueurs d'onde allant de 380 nm à 780 nm, est comprise entre 15 % et 30 % de la transmission $T_u$ d'une zone (6) dépourvue de revêtement de l'élément en verre ou en vitrocéramique (1), et sachant que les particules de diffusion présentent une grosseur de grain primaire moyenne qui est comprise entre 200 nm et 800 nm.

**2.** Elément en verre ou en vitrocéramique (1) selon la revendication 1, dans lequel la résistance aux chocs de l'élément en verre ou en vitrocéramique (1) est au moins de 65 cm en moyenne, déterminée de préférence sur au moins cinq échantillons qui présentent des dimensions latérales de 10*10 cm$^2$ et une épaisseur d'environ 4 mm, avec une bille d'acier ayant un diamètre de 36 mm et une masse de 200 g.

**3.** Elément en verre ou en vitrocéramique (1) selon l'une des revendications 1 ou 2, dans lequel des caractéristiques définies du revêtement ne varient pas en cas de contrainte d'origine thermique, sachant que l'on désigne comme contrainte d'origine thermique notamment une contrainte permanente d'au moins 75 h, à une température d'au moins 200 °C, de préférence d'au moins 250°C, et de façon particulièrement avantageuse de 270 °C ou plus, et sachant notamment que même après une telle contrainte d'origine thermique ou charge thermique, on continue d'obtenir une résistance aux chocs suffisante, d'au moins 65 cm en moyenne, et que de préférence on conserve notamment une adhérence suffisante du revêtement sur le substrat, et que de préférence les propriétés optiques ne sont notamment pas modifiées.

**4.** Elément en verre ou en vitrocéramique (1) selon l'une des revendications 1 à 3, dans lequel, en cas d'observation sous un angle rasant $\alpha$, le lieu d'affichage ($O_w$) d'un élément d'affichage (2) se décale par rapport au lieu d'affichage en cas d'observation verticale ($O_t$), d'un écart $W_\alpha$ qui est obtenu avec l'équation suivante :

$$w_\alpha = D \frac{\sin\alpha}{\sqrt{n^2 - \sin^2\alpha}}$$

où D désigne l'épaisseur de l'élément en verre ou en vitrocéramique (1) et n l'indice de réfraction du verre.

5. Elément en verre ou en vitrocéramique (1) selon l'une des revendications 1 ou 2, dans lequel la valeur Haze est supérieure à 95 % dans la zone (5) et est déterminée de préférence par mesure avec un appareil de mesure Haze Guard Dual.

6. Elément en verre ou en vitrocéramique (1) selon l'une des revendications 1 à 5, dans lequel le rapport entre l'intensité maximale et l'intensité minimale le long de la ligne de liaison de LED entre les deux LEDs extérieures, $I_{min}/I_{max}$, est supérieur à 0,35, de préférence supérieur à 0,7 et de façon particulièrement avantageuse supérieur à 0,95, sachant que l'intensité est respectivement définie en tant que luminosité, à l'aide d'une caméra à nuances de gris.

7. Elément en verre ou en vitrocéramique (1) selon l'une des revendications 1 à 6, dans lequel, lors de l'utilisation de l'élément en verre ou en vitrocéramique, l'intensité d'éclairage I, normalisée sur l'intensité d'éclairage $I_0$, de l'affichage d'un élément d'affichage (2) électro-optique disposé sous la face inférieure de celui-ci correspond, dans la zone (5) à visibilité améliorée, au moins à 0,35 fois, de préférence à 0,7 fois et de façon particulièrement avantageuse à 0,9 fois l'intensité d'éclairage $I_0$ qui est présente perpendiculairement à la source lumineuse (21), au nombre d'au moins une.

8. Elément en verre ou en vitrocéramique (1) selon la revendication 7, dans lequel la source lumineuse (21), au nombre d'au moins une, est réalisée sous forme de source lumineuse ponctuelle.

9. Elément en verre ou en vitrocéramique (1) selon l'une des revendications 7 à 8, dans lequel, lors de l'utilisation de l'élément en verre ou en vitrocéramique, l'élément d'affichage (2) électro-optique présente au moins deux sources lumineuses (21) ponctuelles qui sont disposées à la distance d l'une de l'autre, et dans lequel le rapport de la distance a, entre l'élément en verre ou en vitrocéramique (1) et les au moins deux sources lumineuses (21) ponctuelles, et la distance d, entre les au moins deux sources lumineuses (21) ponctuelles, prend une valeur de 1 ou plus.

10. Elément en verre ou en vitrocéramique (1) selon l'une des revendications 1 à 9, dans lequel les particules de diffusion présentent un indice de réfraction supérieur à 1,6, pour une longueur d'onde de 560 nm.

11. Elément en verre ou en vitrocéramique (1) selon l'une des revendications 1 à 10, dans lequel les particules de diffusion comportent $TiO_2$, $ZrO_2$, ZnO, ZnS, $PbCO_3$, $BaSO_4$, et/ou des mélanges de ceux-ci, par exemple des lithopones.

12. Elément en verre ou en vitrocéramique (1) selon l'une des revendications 1 à 11, dans lequel la couche (3) comprend un chromophore ou un mélange de chromophores, par exemple un pigment luminescent et/ou un colorant luminescent.

13. Elément en verre ou en vitrocéramique (1) selon l'une des revendications 1 à 12, dans lequel, lors de l'utilisation de l'élément en verre ou en vitrocéramique, au moins une couche (4, 41, 42, 43) supplémentaire est disposée entre l'élément d'affichage (2) et l'élément en verre ou en vitrocéramique (1).

14. Elément en verre ou en vitrocéramique (1) selon l'une des revendications 1 à 13, dans lequel l'épaisseur de la couche (3) est comprise entre 1 et 50 $\mu$m, de préférence entre 4 et 10 $\mu$m.

15. Procédé de fabrication d'un élément en verre ou en vitrocéramique (1) avec une meilleure visibilité pour des éléments d'affichage (2) électro-optiques dans au moins une zone (5), selon l'une des revendications précédentes 1 à 14, comprenant les étapes suivantes :

a. préparation d'un élément en verre ou en vitrocéramique (1) doté d'une face supérieure (11) et d'une face inférieure (12),
b. préparation d'un produit de revêtement liquide qui comporte au moins une résine silicone modifiée polyester, réticulant par condensation, un solvant et des particules de diffusion,

c. application du produit de revêtement liquide sur la zone (5), au nombre d'au moins une, de la face inférieure (12) de l'élément en verre ou en vitrocéramique (1),
d. durcissement du produit de revêtement, de manière à obtenir une réticulation de la résine silicone.

16. Procédé selon la revendication 15, selon lequel le durcissement s'effectue par voie thermique, à une température comprise entre 375 °C et 150 °C, pendant une durée allant d'au moins 10 minutes jusqu'à au maximum 2 heures, de préférence entre 275 °C et 180 °C, et de façon particulièrement avantageuse à 250 °C, pendant une durée allant de 30 minutes à une heure.

17. Procédé selon l'une des revendications 15 ou 16, selon lequel la résine silicone présente des groupements fonctionnels.

18. Procédé selon l'une des revendications 15 à 17, selon lequel le produit de revêtement comprend un hydrolysat d'un composé organique d'un métal et/ou d'un métalloïde, de préférence un hydrolysat d'un composé organique à base de silicium.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10259297 B4
- US 2012118870 A
- US 2013286630 A
- DE 102008012891 A1
- WO 2012172257 A1